(19)

Europäisches Patentamt
European Patent Office
Office européen des brevets

(11) **EP 4 489 040 A1**

(12) **EUROPEAN PATENT APPLICATION**
published in accordance with Art. 153(4) EPC

(43) Date of publication:
**08.01.2025 Bulletin 2025/02**

(21) Application number: **23763622.0**

(22) Date of filing: **20.01.2023**

(51) International Patent Classification (IPC):
**H01F 27/33** (2006.01)     **F16F 15/02** (2006.01)
**G10K 11/172** (2006.01)

(52) Cooperative Patent Classification (CPC):
**F16F 15/02; G10K 11/172; H01F 27/33**

(86) International application number:
**PCT/KR2023/001057**

(87) International publication number:
**WO 2023/167423 (07.09.2023 Gazette 2023/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **03.03.2022 KR 20220027179**

(71) Applicant: **LS Electric Co., Ltd.
Gyeonggi-do 14119 (KR)**

(72) Inventor: **KIM, Seong Eon
Anyang-si, Gyeonggi-do 14118 (KR)**

(74) Representative: **K&L Gates LLP
Karolinen Karree
Karlstraße 12
80333 München (DE)**

(54) **VIBRATION REDUCTION UNIT AND TRANSFORMER COMPRISING SAME**

(57)     A vibration reduction unit and a transformer comprising same are disclosed. The vibration reduction unit according to one aspect of the present invention may comprise: a first frame forming one portion of the exterior thereof; a second frame which forms the other portion of the exterior thereof, and which is coupled to the first frame; a resonance space formed inside the second frame so as to reduce transmitted vibration or noise by means of resonance; and a pipe member penetratively coupled to the first frame such that the resonance space communicates with the outside.

FIG. 16

EP 4 489 040 A1

**EP 4 489 040 A1**

## Description

[Technical Field]

The present disclosure relates to a vibration reduction unit and a transformer comprising same, and more particularly, to a vibration reduction unit capable of reducing vibration or noise generated during operation and radiated to the outside and a transformer comprising same.

[Background Art]

A transformer is commonly referred to as a device that converts the value of an alternating voltage or alternating current using electromagnetic induction. The transformer includes a coil that is electrically connected to the outside and receives an alternating current, and an iron core around which the coil is reeled. The coil is provided in plural, each coil is reeled around the iron core.

When an alternating current is applied to any one coil, a magnetic flux is formed on the iron core. According to the change in magnetic flux, the current induced through electromagnetic induction is passed through the other coil. The induced current has a current or voltage different from the applied alternating current, and may be transmitted to an external load.

The iron core provided in the transformer is formed by stacking a plurality of iron plates. As the transformer operates, a magnetostriction phenomenon occurs in the iron core. Due to the magnetostriction phenomenon, vibration and noise may be generated in the iron core. The generated vibration and noise may be transmitted to the outside, which may adversely affect the environment in which the transformer is disposed.

Specifically, the generated vibration may be transmitted to other components of the transformer and to other devices connected to the transformer. Accordingly, there is a risk that the coupling state between the components of the transformer and the coupling state between the transformer and other devices become unstable.

Accordingly, techniques for reducing vibration or noise generated when the transformer operates have been introduced.

Korean Patent Registration No. 10-1530347 discloses a suspension apparatus for reducing vibration of substation transformer. In detail, the suspension apparatus for reducing vibration is disclosed that supports the transformer and absorbs the transformer's own vibration and vibration caused by external influences transmitted to the transformer to block the generated vibrations.

However, the suspension apparatus disclosed by the prior document can support only a transformer having a predetermined size and weight. That is, when the weight or size of the transformer is changed, the suspension apparatus must be redesigned according to the increased weight or size. In other words, the suspension apparatus disclosed by the prior document only supports a transformer having a predetermined size and weight, but it is difficult to support a transformer having a different size and weight.

In addition, the suspension apparatus disclosed by the prior document is formed to support the transformer from the bottom side. Therefore, the height of the transformer and the suspension apparatus is increased, and there is a limit that it is difficult to be accommodated in the existing substation.

Korean Patent Registration No. 10-1661138 discloses a suspension apparatus for reducing vibration of substation transformer. Specifically, the suspension apparatus for reducing vibration is disclosed for absorbing vibration of the transformer by stacking a buffer block inside a box partially buried in the ground, and coupling the transformer to the buffer block.

However, it is assumed that the suspension apparatus disclosed by the prior document is buried in the ground, that is, under the ground. Therefore, it is difficult to apply the suspension apparatus according to the prior document when the transformer is disposed to be spaced apart from the ground.

In addition, the suspension apparatus disclosed by the prior document is also configured to support a transformer from the bottom side. Therefore, it is possible to absorb vibration generated according to the operation of the transformer, but it is difficult to reduce vibration radiated in different directions.

(Patent Document 1) Korean Patent Registration No. 10-1530347 (2015.06.29.)
(Patent Document 2) Korean Patent Registration No. 10-1661138 (2016.10.10.)

[Disclosure]

[Technical Problem]

The present invention is to solve the above problems, and it is an object of the present invention to provide a

2

vibration reducing unit having a structure capable of reducing vibration or noise radiated to the outside and a transformer comprising same.

Another object of the present invention is to provide a vibration reducing unit having a structure capable of reducing generated vibration or noise by offsetting it, and a transformer comprising same.

Still another object of the present invention is to provide a vibration reducing unit having a structure capable of reducing various types of vibration or noise and a transformer comprising same.

Still another object of the present invention is to provide a vibration reducing unit having a structure capable of various modifications of materials and structures and a transformer comprising same.

Still another object of the present invention is to provide a vibration reducing unit having a structure capable of reducing vibration or noise radiated at various positions and a transformer comprising same.

The technical problems of the present invention are not limited to the above-mentioned technical problems, and other technical problems not mentioned may be clearly understood by those skilled in the art to which the present invention pertains from the following description.

[Technical Solution]

According to an aspect of the present invention, there is provided a vibration reducing unit including a first frame forming one portion of the exterior thereof; a second frame which forms the other portion of the exterior thereof, and which is coupled to the first frame; a resonance space formed inside the second frame so as to reduce transmitted vibration or noise by means of resonance; and a pipe member penetratively coupled to the first frame such that the resonance space communicates with the outside.

In this case, there may be provided a vibration reducing unit, wherein a through-hole formed through the first frame such that the resonance space communicates with the outside.

In addition, there may be provided a vibration reducing unit, wherein the through-hole are formed in plural, and the plurality of the through-holes are disposed to surround the pipe member.

In this case, there may be provided a vibration reducing unit, wherein an extending length of the pipe member is formed to be greater than or equal to a thickness of the first frame, so that one end of the pipe member in an extending direction is located to protrude from the first frame.

In addition, there may be provided a vibration reducing unit, wherein the one end of the pipe member is located in the resonance space.

In this case, there may be provided a vibration reducing unit, the first frame is partitioned into a plurality of modules, the resonance space is formed in plural, and the plurality of the resonance spaces are disposed to overlap the plurality of the modules, respectively, along the extending direction of the pipe member.

In addition, there may be provided a vibration reducing unit, wherein the pipe member is provided in plural, and the plurality of the pipe members penetrate the plurality of the modules, respectively, and each end of the plurality of the pipe members is respectively located in the plurality of the resonance spaces.

In this case, there may be provided a vibration reducing unit, including a through-hole formed through the first frame such that the resonance space communicates with the outside, and the through-hole is formed in each of the plurality of the modules.

In addition, there may be provided a vibration reducing unit, wherein the plurality of through-holes are formed in each of the plurality of modules, and the plurality of through-holes communicates with each of the plurality of resonance spaces.

In this case, there may be provided a vibration reducing unit, including a partition wall located in the resonance space and partitioning the resonance space into a plurality of spaces.

In addition, there may be provided a vibration reducing unit, wherein the partition wall comprises one portion extending in one direction and the other portion extending in the other direction, and the one portion and the other portion intersect and extend at a predetermined angle.

In addition, according to an aspect of the present invention, there is provided a transformer including an electrical connection unit that is electrically connected to an external power supply and an external load, converts power transferred from the power supply and provides the converted power to the load; a housing having an accommodation space for accommodating the electrical connection unit and a wall portion surrounding the accommodation space; and a vibration reduction unit accommodated in the accommodation space and each coupled to the housing and configured to reduce vibration or noise generated from the electrical connection unit, wherein the vibration reduction unit includes a first frame forming one side toward the electrical connection unit; a second frame coupled to the first frame and the wall portion, respectively; a resonance space formed inside the second frame so as to reduce the transmitted vibration or noise by means of resonance; and a pipe member penetratively coupled to the first frame such that the resonance space communicates with the accommodation space.

In this case, there may be provided a transformer, wherein the vibration reduction unit comprises a plurality of through-hole formed through the first frame such that the resonance space communicates with the accommodation space.

In addition, there may be provided a transformer, wherein a resonance frequency of the vibration or noise generated in the resonance space is calculated by using one or more of an extending length and a cross-sectional area of the pipe member, an extending length and a cross-sectional area of the through-hole, and a volume of the resonance space as a factor.

In this case, there may be provided a transformer, wherein the pipe member extends by a length equal to or larger than the thickness of the first frame, and one end of the pipe member in the extending direction is located in the resonance space.

[Advantageous Effects]

According to the above configuration, the vibration reducing unit and the transformer comprising same according to the embodiment of the present invention can reduce vibration or noise radiated to the outside.

First, the vibration reduction unit is coupled to the wall portion of the housing. The vibration reduction unit is accommodated in the accommodation of the housing and coupled to the inner surface of the wall portion. The vibration reduction unit includes a first frame facing an electrical connection unit that acts as a vibration source or a noise source, and a second frame respectively coupled to the first frame and the wall portion.

The resonance space which can offset the generated vibration or noise by using the resonance phenomenon is formed inside the second frame. In the first frame, a pipe member penetratively coupled to the first frame, a through-hole is formed through a surface of the first frame such that the accommodation space communicated with the resonance space.

Accordingly, vibration or noise generated in the electrical connection unit can be offset and reduced by the vibration reduction part, and then radiated to the outside through the wall portion. Accordingly, the generated vibration or noise can be radiated to the outside of the transformer after being reduced.

In addition, according to the above configuration, the vibration reduction unit and the transformer comprising same according to an embodiment of the present invention can reduce the generated vibration or noise by offsetting it.

The vibration reduction unit is configured to reduce vibration or noise generated by means of a resonance phenomenon. The vibration generated by the vibration reduction unit can be determined by the shape of the pipe member, through hole, and resonance space provided in the vibration reduction unit. The vibration reduction unit may be designed according to a resonance frequency corresponding to a frequency of vibration or noise generated in the electrical connection unit.

Therefore, the vibration reduction unit can reduce vibration or noise formed in the form of waves by offsetting the vibration or noise. Accordingly, vibration or noise generated in the electrical connection unit can be more effectively reduced.

In addition, according to the above configuration, the vibration reduction unit according to an embodiment of the present invention and the transformer comprising same can reduce various types of vibration or noise.

As described above, the resonance frequency of the vibration reduction unit can be adjusted through a change in its structure. For example, the resonance frequency may be adjusted based on a factor such as the length and cross-sectional area of the pipe member, the length and cross-sectional area of the through-hole, and the volume of the resonance space of the vibration reduction unit.

Accordingly, the structure of the vibration reduction unit is changed to correspond to the frequency of vibration or noise generated in the electrical connection unit, thereby effectively reducing the generated vibration or noise.

In addition, according to the above configuration, the vibration reduction unit according to an embodiment of the present invention and the transformer comprising same are capable of various modifications of a structure.

The first frame constituting the vibration reduction unit can be partitioned into a plurality of modules. Additionally, the resonance space formed inside the second frame can also be partitioned into a plurality of spaces by partition walls. A plurality of partitioned modules and spaces may be configured to offset vibration or noise of different frequencies.

In an embodiment, the vibration reduction unit may be provided as a miniaturized module. The miniaturized module can be formed to have the pipe, and through-hole and resonance space member of the different sizes. Accordingly, a plurality of miniaturized modules may offset vibration or noise of different frequencies.

Therefore, it is possible to variously change the vibration reduction unit and the transformer comprising same depending on the type of the generated vibration or noise.

In addition, according to the above configuration, the vibration reducing unit according to the embodiment of the present invention and the transformer comprising same may reduce the vibration or noise radiated at various positions.

In an embodiment, the vibration reduction unit may be provided in plural. A plurality of vibration reduction units may be respectively coupled to a plurality of wall portions surrounding the accommodation space. That is, the vibration reduction units may be disposed at different positions to reduce vibration or noise radiated in various directions from the electrical connection unit.

Accordingly, vibration or noise generated in the electrical connection unit can be reduced in various positions and then transferred to the outside of the transformer.

It should be understood that the effects of the present invention are not limited to the above effects, and include all effects that can be inferred from the detailed description of the present invention or the configuration of the invention described in the claims.

[Description of Drawings]

FIG. 1 is a perspective view illustrating a transformer according to an embodiment of the present disclosure.

FIG. 2 is a partially open perspective view illustrating the inside of the transformer of FIG. 1.

FIG. 3 is a perspective view illustrating a state in which the vibration reduction unit according to an embodiment of the present disclosure is provided in the transformer of FIG. 1.

FIG. 4 is a perspective view illustrating the vibration reduction unit of FIG. 3.

FIG. 5 is a use state view illustrating an example of a method of installing the vibration reduction unit of FIG. 3.

FIG. 6 is a use state view illustrating another example of a method of installing the vibration reduction unit of FIG. 3.

FIG. 7 is a perspective view (a) and a side cross-sectional view (b) illustrating the vibration reduction unit according to the transformer and the modified example of FIG. 1.

FIG. 8 is a perspective view (a) and a side cross-sectional view (b) illustrating the vibration reduction unit according to the transformer and the modified example of FIG. 1.

FIG. 9 is a partially open perspective view illustrating a state in which the vibration reduction unit according to another embodiment of the present disclosure is provided in the transformer of FIG. 1.

FIG. 10 is a side cross-sectional view illustrating the transformer and the vibration reduction unit of FIG. 9.

FIG. 11 is a side cross-sectional view illustrating the vibration reduction unit according to the transformer and the modified example of FIG. 9.

FIG. 12 is a side cross-sectional view illustrating the vibration reduction unit according to the transformer and the modified example of FIG. 9.

FIG. 13 is a side cross-sectional view illustrating the vibration reduction unit according to the transformer and the modified example of FIG. 9.

FIG. 14 is a partially open perspective view illustrating a state in which the vibration reduction unit according to another embodiment of the present disclosure is provided in the transformer of FIG. 1.

FIG. 15 is a perspective view illustrating the vibration reduction unit of FIG. 14.

FIG. 16 is an exploded perspective view illustrating the vibration reduction unit of FIG. 14.

FIG. 17 is a perspective view (a) and a plan view (b) of another angle illustrating the vibration reduction unit of FIG. 14.

FIG. 18 is a side cross-sectional view illustrating the vibration reduction unit of FIG. 14.

FIG. 19 is a perspective view illustrating a modified example of the vibration reduction unit of FIG. 14.

FIG. 20 is a perspective view illustrating another modified example of the vibration reduction unit of FIG. 14.

[Modes of the Invention]

Hereinafter, exemplary embodiments of the present disclosure will be described in detail so that those of ordinary skill in the art can readily implement the present disclosure with reference to the accompanying drawings. The present disclosure may be embodied in many different forms and is not limited to the embodiments set forth herein. In the drawings, parts unrelated to the description are omitted for clarity of description of the present disclosure, and throughout the specification, same or similar reference numerals denote same elements.

Terms and words used in the present specification and claims should not be construed as limited to their usual or dictionary definition, and they should be interpreted as a meaning and concept consistent with the technical idea of the present disclosure based on the principle that inventors may appropriately define the terms and concept in order to describe their own invention in the best way.

Accordingly, the embodiments described in the present specification and the configurations shown in the drawings correspond to preferred embodiments of the present disclosure, and do not represent all the technical idea of the present disclosure, so the configurations may have various examples of equivalent and modification that can replace them at the time of filing the present disclosure.

In the following description, in order to clarify the features of the present disclosure, descriptions of some components may be omitted.

## 1. Definition of terms

The term "electrically connection" used in the following description means that two or more members are connected to transmit an electrical signal or current. In an embodiment, the electric-current-conducting may be formed in a wired form by a wire member or the like or in a wireless form such as RFID, Bluetooth, Wi-Fi or the like.

The term "communication" used in the following description means that one or more members are connected to each other in fluid communication. In an embodiment, the communication may be formed by opening the inside of each member or by other members such as a conduit, a pipe, etc.

As used in the following description, the terms "upper side", "lower side", "front side", "rear side", "left side" and "right side" will be understood with reference to the coordinate system shown throughout the accompanying drawings.

## 2. Description of the configuration of a transformer 10 according to an embodiment of the present disclosure

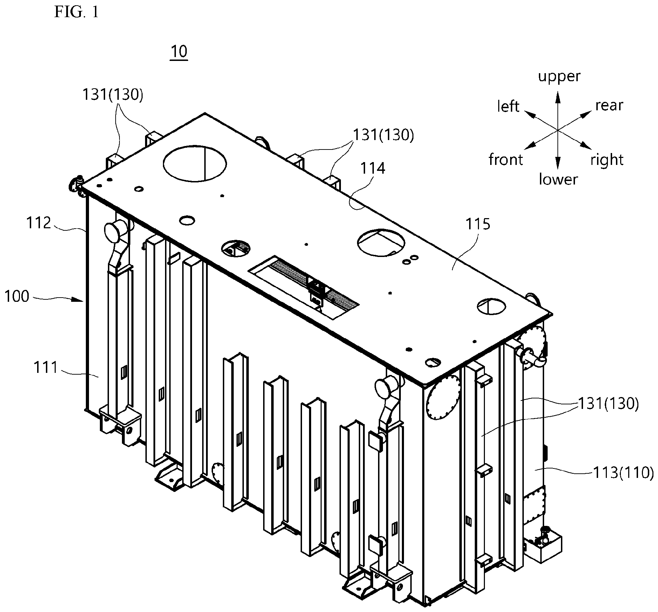

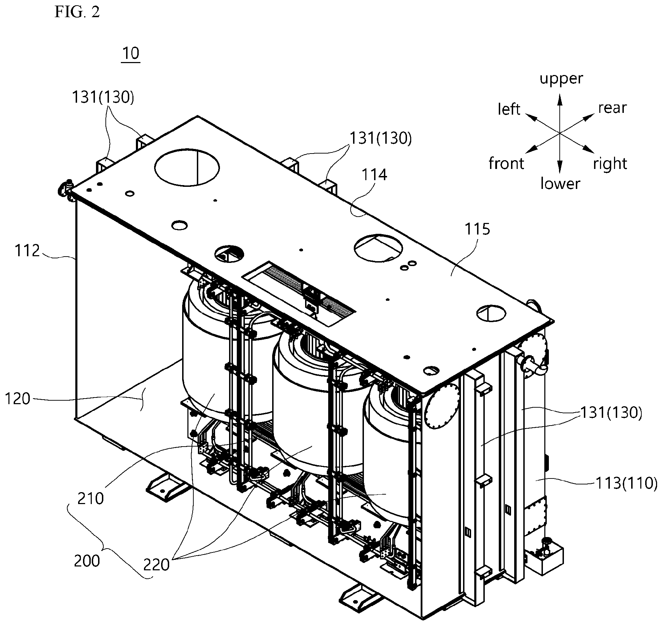

Referring to FIGS. 1 to 3, a transformer 10 according to an embodiment of the present disclosure is illustrated. The transformer 10 according to an embodiment of the present disclosure is configured to reduce vibration or noise caused by magnetostriction generated in an iron core member 210 during operation. This may be achieved by vibration reduction units 300, 400, and 500 according to various embodiments to be described later.

The transformer 10 is electrically connected to the outside. The transformer 10 may receive a current to be adjusted in voltage. The transformer 10 may transmit the voltageadjusted current to the outside. In an embodiment, the current may be an alternating current (AC).

Since the principle of operation of the transformer 10 is a well-known technique, a detailed description thereof will be omitted.

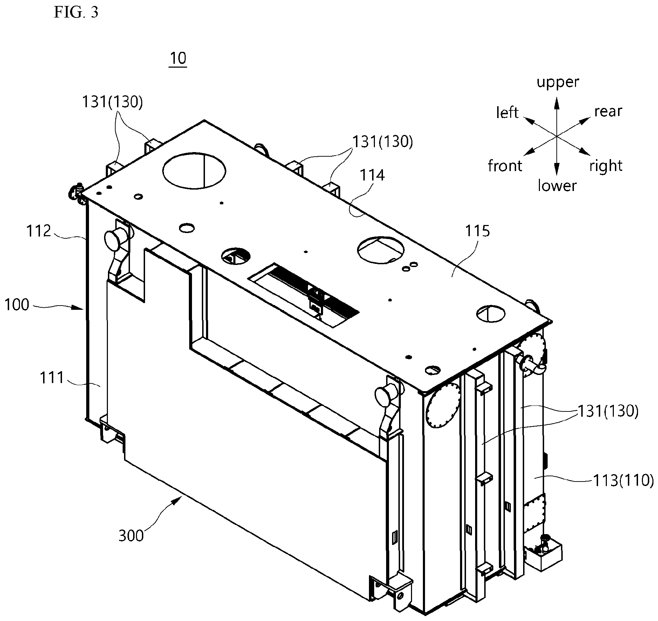

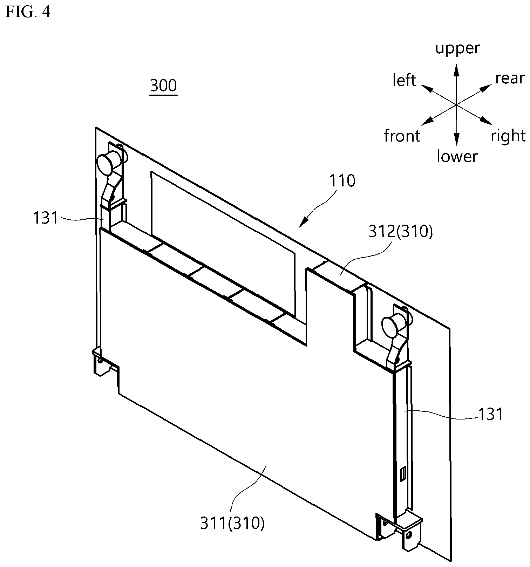

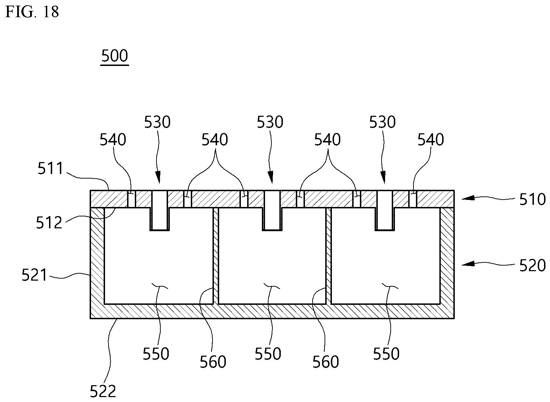

In the embodiment illustrated in FIGS. 1 to 2, the transformer 10 includes a housing 100 and an electrical connection unit 200. Referring to FIGS. 3 to 20, the transformer 10 according to the illustrated embodiment includes the vibration reduction units 300, 400, and 500 according to various embodiments.

Hereinafter, the configuration of the transformer 10 according to the embodiment of the present disclosure will be described with reference to the accompanying drawings, and the vibration reduction units 300, 400, and 500 according to each embodiment will be separately described.

The housing 100 forms the exterior of the transformer 10. A space is formed inside the housing 100 to accommodate various components of the transformer 10. The space of the housing 100 may be electrically connected to the outside to transmit a current to be transformed. In addition, the transformed current may be transmitted back to the outside.

The housing 100 may have an arbitrary shape that forms the exterior of the transformer 10 and may mount various components. In the illustrated embodiment, the housing 100 is a rectangular pillar shape extended in the vertical direction with a rectangular cross-section in which an extending length in the left and right direction is longer than an extending length in the front and rear direction.

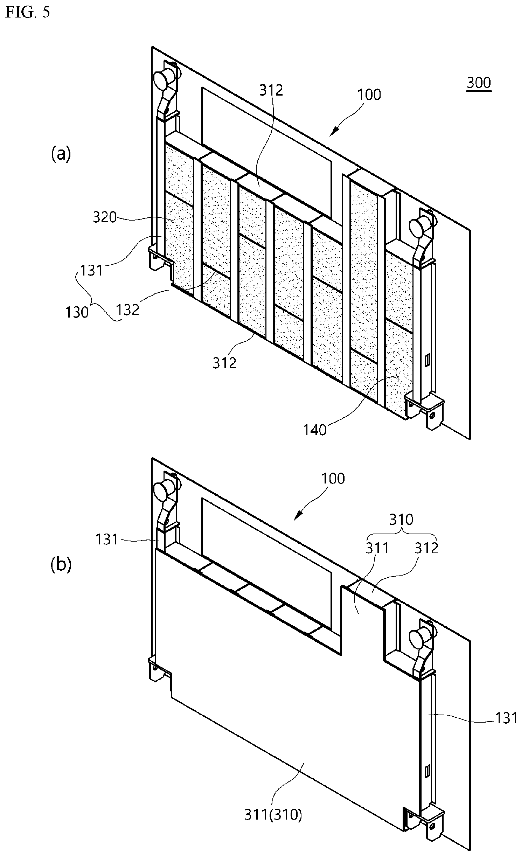

In the illustrated embodiment, the housing 100 includes a wall portion 110, an accommodation space 120, and a reinforcing rib 130. Referring to (a) of FIG. 5, the housing 100 according to the illustrated embodiment further includes a filling space 140.

The wall portion 110 forms the outer circumference of the housing 100. The wall portion 110 surrounds a space formed inside the housing 100, that is, the accommodation space 120, from the outside.

The wall portion 110 may be provided in plural. The plurality of wall portions 110 may form the outer circumference of the housing 100 at different positions. In the illustrated embodiment, the wall portion 110 includes a pair of wall portions that face each other and are spaced apart in the up and down directions, another pair of wall portions that face each other and are spaced apart in the left and right directions, and one wall portion that is located on the rear side. Each pair of wall portions 110 is disposed to face each other with the accommodation space 120 interposed therebetween.

The wall portion 110 may have an arbitrary shape that forms the outer circumference of the housing 100 and may surround the accommodation space 120. In the illustrated embodiment, the wall portion 110 is provided in a rectangular plate shape having a rectangular cross-section and extending to a predetermined thickness.

The plurality of wall portions 110 may be continuous while forming a predetermined angle with each other. In the illustrated embodiment, among the plurality of wall portions 110, the wall portions 110 disposed adjacent to each other are continuously perpendicular to each other. The coupling method of the plurality of wall portions 110 may be changed according to the structure of the housing 100.

The plurality of wall portions 110 are disposed to surround the accommodation space 120 at a plurality of positions. In the illustrated embodiment, the plurality of wall portions 110 are disposed to surround the accommodation space 120 on the front side, the rear side, the upper side, the lower side, the left side, and the right side, respectively. As described above, the wall portion 110 may be provided on the front side to surround the front side of the accommodation space 120.

In the illustrated embodiment, the wall portion 110 includes a first wall 111, a second wall 112, a third wall 113, a fourth wall 114, and a fifth wall 115.

The first wall 111 is provided as any one of the wall portions 110. The first wall 111 surrounds the accommodation space 120 on one side. In the illustrated embodiment, the first wall 111 is disposed on the front side and surrounds the accommodation space 120 on the front side.

The second wall 112 is provided as another of the wall portions 110. The second wall 112 surrounds the accommodation space 120 on the other side. In the illustrated embodiment, the second wall 112 is disposed on the left side and surrounds the accommodation space 120 on the left side.

The third wall 113 is provided as another one of the wall portions 110. The third wall 113 surrounds the accommodation space 120 on the other side. In the illustrated embodiment, the third wall 113 is disposed on the right side and surrounds the accommodation space 120 on the right side. The third wall 113 is disposed to face the second wall 112 with the accommodation space 120 interposed therebetween.

The fourth wall 114 is provided as another one of the wall portions 110. The fourth wall 114 surrounds the accommodation space 120 on the other side. In the illustrated embodiment, the fourth wall 114 is disposed on the rear side and surrounds the accommodation space 120 on the rear side. The fourth wall 114 is disposed to face the first wall 111 with the accommodation space 120 interposed therebetween.

A plurality of reinforcing ribs 130 are formed on at least one of the first wall 111, the second wall 112, the third wall 113, and the fourth wall 114. In the illustrated embodiment, reinforcing ribs 130 are formed on all of the first to fourth walls 111, 112, 113, and 114. The reinforcing rib 130 extends in the vertical direction to reinforce the rigidity of the first to fourth walls 111, 112, 113, and 114.

The fifth wall 115 is provided as another one of the wall portions 110. The fifth wall 115 is disposed to cover the accommodation space 120. In the illustrated embodiment, the fifth wall 115 is disposed on the upper side to surround the accommodation space 120 on the upper side.

Although not shown, the wall portion 110 may include another wall that surrounds the accommodation space 120 on the lower side. Another wall may be disposed on the lower side and surround the accommodation space 120 on the lower side. In the above embodiment, another wall is disposed to face the fifth wall 115 with the accommodation space 120 interposed therebetween.

Meanwhile, the vibration reduction units 300, 400, and 500 according to each embodiment of the present disclosure may be provided on any one or more of the first to fourth walls 111, 112, 113, and 114. This will be described later in detail.

The accommodation space 120 is a space formed inside the housing 100. The accommodation space 120 accommodates various components of the transformer 10. In an embodiment, the accommodation space 120 may accommodate the electrical connection unit 200 and the vibration reduction units 400 and 500 according to each embodiment. The accommodation space 120 is a space formed to be surrounded by a plurality of wall portions 110.

The accommodation space 120 is electrically connected to the outside. The current to be transformed may be transmitted to the components received in the accommodation space 120. In addition, the current that is boosted or dropped by the electrical connection unit 200 may be transmitted to the outside. To this end, the accommodation space 120 may partially receive a plurality of conductive wire members (not shown) extending from the outside.

The reinforcing rib 130 is coupled to the wall portion 110 to reinforce the rigidity of the wall portion 110. The reinforcing rib 130 is formed to extend in one direction in which the wall portion 110 extends, that is, in the vertical direction in the illustrated embodiment.

The reinforcing rib 130 may be provided in plural. The plurality of reinforcing ribs 130 may be disposed to be spaced apart from each other along the other direction in which the wall portion 110 extends. In the embodiment illustrated in FIG. 1, the reinforcing ribs 130 are disposed to be spaced apart from each other along the front and rear directions.

The reinforcing ribs 130 may be formed at a plurality of positions. As described above, a plurality of wall portions 110 may be provided to surround the accommodation space 120 in various directions. Therefore, the reinforcing ribs 130 may be formed for each of the plurality of wall portions 110.

In the illustrated embodiment, the reinforcing ribs 130 are formed on the first to fourth walls 111, 112, 113, and 114, respectively.

The reinforcing ribs 130 may have an arbitrary shape that is coupled to the wall portion 110 and may reinforce the rigidity of the wall portion 110. In the illustrated embodiment, the reinforcing ribs 130 extend in the vertical direction and is provided in the form of a column having a predetermined thickness toward the outside.

The reinforcing ribs 130 may include a plurality of portions extending in different directions. Referring to FIG. 5, the reinforcing ribs 130 include a first reinforcing rib 131 and a second reinforcing rib 132.

The first reinforcing rib 131 is formed to extend in one direction, that is, in the vertical direction in the illustrated embodiment to reinforce the rigidity of the wall portion 110. The first reinforcing rib 131 may be extended in the height direction of the housing 100.

The first reinforcing ribs 131 may be formed in plural. A plurality of first reinforcing ribs 131 may be disposed to be spaced apart from each other in the other direction. In the illustrated embodiment, the first reinforcing rib 131 is disposed to be spaced apart in the horizontal direction.

That is, the plurality of first reinforcing ribs 131 provided in the first wall 111 and the fourth wall 114 are disposed to be spaced apart from each other in the left and right directions. In addition, the plurality of first reinforcing ribs 131 provided in the second wall 112 and the third wall 113 are disposed to be spaced apart from each other in the front and rear directions.

A space in which a plurality of first reinforcing ribs 131 are formed to be spaced apart may be defined as a filling space 140. The filling space 140 may be filled with a sound absorbing member 320 of the vibration reduction unit 300 to be described later, thereby reducing vibration or noise generated in the electrical connection unit 200.

The second reinforcing rib 132 extends between the plurality of first reinforcing ribs 131.

The second reinforcing rib 132 is formed to extend in the other direction, that is, in the horizontal direction in the illustrated embodiment to reinforce the rigidity of the wall portion 110. In addition, the second reinforcing rib 132 extends between the plurality of first reinforcing ribs 131 to reinforce the rigidity of the first reinforcing ribs 131 spaced apart from each other.

The second reinforcing rib 132 may extend in a cross-sectional direction of the housing 100. In the illustrated embodiment, the second reinforcing rib 132 extending in the first wall 111 and the fourth wall 114 may extend in the left and right directions. In addition, the second reinforcing rib 132 extending in the second wall 112 and the third wall 113 may extend in the front and rear directions.

The second reinforcing rib 132 may be formed in plural. The plurality of second reinforcing ribs 132 may be disposed to be spaced apart in the one direction. In the illustrated embodiment, the second reinforcing rib 132 is disposed to be spaced apart from each other in the direction in which the first reinforcing ribs 131 extend, that is, in the vertical direction.

A space in which the plurality of second reinforcing ribs 132 are spaced apart may also be defined as the filling space 140. The filling space 140 may be filled with the sound absorbing member 320 of the vibration reduction unit 300 to be described later, thereby reducing vibration or noise generated in the electrical connection unit 200. This will be described later in detail.

The filling space 140 is a space formed between the plurality of reinforcing ribs 130. Both sides of the filling space 140 in the horizontal direction are surrounded by a plurality of reinforcing ribs 130. In addition, another side of the filling space 140 in the horizontal direction is surrounded by the wall portion 110, and each end in the vertical direction and the other side in the horizontal direction are surrounded by the cover member 310 of the vibration reducing portion 300.

Referring to FIG. 5, a filling space 140 formed in the first wall 111 is illustrated. In the illustrated embodiment, the left and right sides of the filling space 140 are surrounded by the first reinforcing ribs 131. The rear side of the filling space 140 is surrounded by the first wall 111, and the front side, the upper side, and the lower side of the filling space 140 are surrounded by the cover member 310.

The filling space 140 may be partitioned into a plurality of small spaces. The compartment is formed by a plurality of reinforcing ribs 130. That is, referring to (a) of FIG. 5, the filling space 140 is partitioned in the horizontal direction by the plurality of first reinforcing ribs 131 spaced apart from each other. In addition, the filling space 140 is partitioned in a vertical direction by the plurality of second reinforcing ribs 132 spaced apart from each other.

The plurality of spaces formed by partitioning the filling space 140 are not arbitrarily communicated by the reinforcing ribs 130. However, the plurality of spaces may communicate with each other by the vibration reduction unit 300 according to an embodiment of the present disclosure to be described later.

The sound absorbing member 320 of the vibration reduction unit 300 may be accommodated in the filling space 140. The sound absorbing member 320 is configured to absorb vibration or noise generated by the electrical connection unit 200 and transmitted to the wall portion 110. Accordingly, the vibration or noise generated is not radiated to the outside. This will be described later in detail.

The electrical connection unit 200 boosts or drops the current transmitted from the outside. Therefore, the electrical connection unit 200 may be said to perform the function of the transformer 10 substantially.

The electrical connection unit 200 is accommodated in the inner space of the housing 100, that is, the accommodation space 120. The accommodation space 120 is defined by being surrounded the plurality of wall portions 110, and the electrical connection unit 200 accommodated in the accommodation space 120 is also surrounded by the plurality of wall portions 110 and is not arbitrarily exposed to the outside.

Therefore, the electrical connection unit 200 is not damaged by the environment outside the transformer 10. In addition, workers staying near the transformer 10 are physically separated from the electrical connection unit 200 to prevent safety accidents caused by currents transmitted to the electrical connection unit 200.

The electrical connection unit 200 is electrically connected to the outside. The power supply may be formed by a conductive wire member (not shown) that electrically connects the accommodation space 120 to the outside. A process in which the introduced current is boosted or dropped by the electrical connection unit 200 is a well-known technique, and thus a detailed description thereof will be omitted.

In the illustrated embodiment, the electrical connection unit 200 includes an iron core member 210, a winding member 220, and a support frame 230.

The iron core member 210 forms the structure of the electrical connection unit 200. A plurality of winding members 220 electrically connected to the outside are wound on the iron core member 210. When a current is applied to at least one of the plurality of winding members 220, a magnetic flux is generated in the iron core member 210. The generated magnetic flux generates induced electromotive forces on the other one or more among the plurality of winding members 220.

The iron core member 210 may be formed by stacking a plurality of plates. In an embodiment, the iron core member 210 is formed by stacking the plurality of plates having a thickness in the front and rear directions.

The plurality of plates constituting the iron core member 210 may be formed of arbitrary material capable of forming a magnetic flux by a current applied to the winding member 220. In an embodiment, the plate may be formed of a wrought iron material.

The iron core member 210 may be formed in an arbitrary shape in which the plurality of winding members 220 may be wound to form the magnetic flux.

The transformer 10 according to an embodiment of the present disclosure includes the vibration reduction unit 400 according to another embodiment, thereby reducing vibration or noise caused by a magnetostriction phenomenon generated in the iron core member 210. This will be described later in detail.

The winding member 220 is wound around the iron core member 210. The current applied to the winding member 220 generates the magnetic flux in the iron core member 210, and the current may be boosted or dropped by the induced electromotive force generated by the generated magnetic flux and transmitted to the outside.

The winding member 220 is electrically connected to the outside. The current to be boosted or dropped may be transmitted to the winding member 220. The boosted or dropped current may be transmitted to the outside.

The winding member 220 is wound around the iron core member 210. Specifically, the winding member 220 is wound around a portion of the iron core member 210 extending in the vertical direction, that is, in the height direction in the embodiment.

The winding member 220 is accommodated in the iron core member 210. Specifically, the winding member 220 is accommodated in a space surrounded between portions extending in the height direction.

The winding members 220 may be provided in plural. The plurality of winding members 220 may be disposed to be spaced apart from each other and wound around the iron core member 210 at different positions.

In the illustrated embodiment, three winding members 220 are provided and disposed to be spaced apart from each other. The plurality of winding members 220 are not in contact with each other.

Any one of the plurality of winding members 220 may be electrically connected to the outside to receive a current to be boosted or dropped. Another one of the plurality of winding members 220 may be electrically connected to the outside to transmit the boosted or lowered current to the outside.

A current induced by a current applied to any one winding member 220 may be applied to the other winding member 220 among the plurality of winding members 220. In addition, the other winding member 220 may induce a current to another winding member 220 through the induced current.

The winding member 220 may be provided in an arbitrary shape that may be wound around the iron core member 210 to generate the induced electromotive force. In the illustrated embodiment, the winding member 220 has a circular cross-section in which a hollow is formed therein, and has a cylinder shape extending in the vertical direction.

The winding member 220 may be provided in an arbitrary form in which a current induced by the current applied to any one winding member 220 may be applied. In an embodiment, the winding member 220 may be provided as a coil.

The support frame 230 supports the iron core member 210 and the winding member 220 wound around the iron core member 210. The support frame 230 may be connected to the iron core member 210 and the housing 100, respectively.

The support frame 230 may be formed of a material of high rigidity. In an embodiment, the support frame 230 may be formed of an alloy material including iron (Fe).

The support frame 230 may be formed in a shape corresponding to the iron core member 210. In the illustrated embodiment, the iron core member 210 is formed to have a rectangular cross-section having a length in the left and right directions and a height in the vertical direction. Accordingly, the support frame 230 may also be formed to extend in the left and right directions.

The support frame 230 may be coupled to the iron core member 210 at a plurality of locations to support the iron core member 210. In the illustrated embodiment, the support frame 230 is formed to surround the upper end and the lower end of the iron core member 210 from the outside, respectively.

As will be described later, the transformer 10 according to an embodiment of the present disclosure includes a vibration reduction unit 400 connected to the iron core member 210, the support frame 230, and the housing 100, respectively. The vibration reduction unit 400 additionally supports the iron core member 210 and the support frame 230, and is configured to reduce vibration or noise generated by the iron core member 210 and the support frame 230. This will be described later in detail.

3. Description of a vibration reduction unit 300 according to an embodiment of the present disclosure

Referring to FIGS. 3 to 8, the transformer 10 according to an embodiment of the present disclosure includes a vibration reduction unit 300. The vibration reduction unit 300 according to this embodiment is provided in the housing 100 to reduce vibration or noise.

Specifically, the vibration reduction unit 300 is coupled to the wall portion 110 of the housing 100 to absorb vibration or noise transmitted from the electrical connection unit 200 to the wall portion 110. Accordingly, the amount of vibration or noise radiated to the outside of the transformer 10 may be reduced.

The vibration reduction unit 300 is coupled to the wall portion 110. In the embodiment illustrated in FIG. 3, the vibration reduction unit 300 is shown as being provided on the first wall 111 on the front side. Alternatively, the vibration reduction unit 300 may be provided on any one or more of the walls including reinforcing ribs 130 and filling spaces 140 formed between the reinforcing ribs 130, that is, the second to fourth walls 112, 113, and 114.

That is, the vibration reduction unit 300 may be provided on one or more of the plurality of walls.

In the illustrated embodiment, the vibration reduction unit 300 includes a cover member 310, a sound absorbing member 320, a communication hole 330, a closure member 340, and a protruding flow path portion 350. Among the above components, the communication hole 330, the closure member 340, and the protruding flow path portion 350 may be provided in various embodiments of the vibration reduction unit 300.

The cover member 310 forms the exterior of the vibration reduction unit 300. The cover member 310 seals the sound absorbing member 320 accommodated in the filling space 140. In addition, the cover member 310 fixes and supports the sound absorbing member 320 to prevent it from leaking or being exposed to the outside.

The cover member 310 is coupled to the wall portion 110. Specifically, the cover member 310 covers the filling space 140 formed in the wall portion 110 and is coupled to the outer surface of the reinforcing rib 130. In the embodiment illustrated in FIGS. 3 to 5, the cover member 310 is coupled to the front side surface of the reinforcing rib 130 to cover the filling space 140 from the front side.

The cover member 310 may be provided in plural. The plurality of cover members 310 may be coupled to the plurality of wall portions 110, respectively. As an example, four cover members 310 may be provided and coupled to the first to fourth walls 111, 112, 113, and 114, respectively.

The cover member 310 covers the reinforcing rib 130 and the sound absorbing member 320 accommodated in the filling space 140 from the outside and may be coupled to the wall portion 110. In the illustrated embodiment, the cover member 310 is coupled while covering the reinforcing rib 130 formed in the first wall 111 and the sound absorbing member 320 accommodated in the filling space 140 from the front side, the lower side, and the upper side.

The cover member 310 may include a plurality of portions. The plurality of portions of the cover member 310 may be coupled to the wall portion 110 while covering the reinforcing rib 130, the filling space 140, and the sound absorbing member 320 accommodated in the filling space 140 at different positions. In the illustrated embodiment, the cover member 310 includes a main cover 311 and a sub-cover 312.

The main cover 311 forms one portion of the plurality of portions of the cover member 310. The main cover 311 covers the reinforcing rib 130, the filling space 140, and the sound absorbing member 320 accommodated in the filling space 140 along its thickness direction and is coupled to the wall portion 110. In the illustrated embodiment, the main cover 311 is coupled to the first wall 111 to cover the reinforcing rib 130 of the first wall 111, the filling space 140, and the sound absorbing member 320 accommodated therein from the front side.

Although not shown, the vibration reduction unit 300 may be provided on the second to fourth walls 112, 113, and 114. At this time, it will be understood that the main cover 311 covers the reinforcing rib 130, the filling space 140, and the sound absorbing member 320 accommodated therein on the left, right, and rear sides, respectively, and is coupled to each of the walls 112, 113, and 114.

The main cover 311 may be provided in a plate shape. In the illustrated embodiment, the main cover 311 is provided in a polygonal plate shape having a cross-section in which an extending length in the left and right directions is longer than an extending length in the vertical direction, and having a thickness in the front and rear directions. The shape of the main cover 311 may be changed according to the shape of the wall portion 110 and the shape and arrangement method of the reinforcing rib 130.

The main cover 311 is continuous with the sub-cover 312.

The sub-cover 312 forms another portions among the plurality of portions of the cover member 310. The sub-cover 312 covers the reinforcing rib 130, the filling space 140, and the sound absorbing member 320 accommodated in the filling space 140 along a direction different from the direction of the main cover 311 and is coupled to the wall portion 110.

The sub-cover 312 may be provided in plural. The plurality of sub-covers 312 may be coupled to the wall portion 110 while covering the plurality of filling spaces 140 formed between the plurality of reinforcing ribs 131, respectively.

The sub-cover 312 may be provided in a plurality of pairs. The plurality of pairs of sub-covers 312 may be coupled to the wall portion 110 while covering the reinforcing rib 130, the filling space 140, and the sound absorbing member 320 accommodated in the filling space 140 at different positions.

In the embodiment illustrated in FIG. 5, the sub-covers 312 are provided in a pair positioned on the upper side and the lower side and facing each other with the filling space 140 interposed therebetween.

Seven sub-covers 312 located on the upper side are provided to cover the upper side of each of the seven filling spaces 140 formed between the eight reinforcing ribs 130 (i.e., the first reinforcing ribs 131). Seven sub-covers 312 located on the lower side are also provided to cover the lower side of each of the seven filling spaces 140.

The sub-cover 312 is continuous with the main cover 311. The main cover 311 and the sub-cover 312 may be continuous while forming a predetermined angle. In the embodiment illustrated in FIG. 5, the sub-cover 312 and the main cover 311 extend perpendicular to each other.

As the sub-cover 312 and the main cover 311 are arranged continuously, the sound absorbing member 320 accommodated in the filling space 140 is not randomly exposed to the outside. As a result, damage to the sound absorbing member 320 due to the external environment may be prevented.

Referring to FIG. 5, a process in which the vibration reduction unit 300 according to an embodiment is installed in the wall portion 110 is illustrated.

Referring to (a) of FIG. 5, the sound absorbing member 320 is accommodated in the filling space 140. As described above, the filling space 140 is partitioned into a plurality of small spaces by a plurality of first reinforcing ribs 131 and second reinforcing ribs 132. The sound absorbing member 320 may be accommodated in a plurality of partitioned small spaces, respectively.

In this case, it is preferable that the sub-cover 312 covering the filling space 140 in the height direction, that is, on the upper side and the lower side, is pre-coupled. That is, in the above embodiment, the sub-cover 312 may limit an extension distance in the upper and lower directions of the filling space 140. Accordingly, the amount of the sound absorbing member 320 to be filled in the filling space 140 may be accurately calculated, thereby improving work efficiency.

Referring to (b) of FIG. 5, a state in which the main cover 311 is coupled after the sound absorbing member 320 is filled in the filling space 140 is illustrated. The main cover 311 covers the plurality of first reinforcing ribs 131, the second reinforcing rib 132, the filling space 140 formed therebetween, and the sound absorbing member 320 accommodated therein and is coupled to the wall portion 110.

In the illustrated embodiment, the rear side surface of the main cover 311 may be coupled to the front side surfaces of the first reinforcing rib 131 and the second reinforcing rib 132, respectively. In addition, the upper and lower edges of the main cover 311 may be coupled to and continuous with the front edge of the sub-covers 312, respectively.

Although not shown, a fastening member for maintaining the coupling state between the main cover 311 and the wall portion 110 may be provided. The fastening member (not shown) may be provided in the form of a screw member or the like that is penetratively coupled to the main cover 311 and the first reinforcing rib 131.

The sound absorbing member 320 may be made of any material capable of receiving and absorbing external vibration or noise. In an embodiment, the sound absorbing member 320 may be formed of urethane foam. Alternatively, the sound absorbing member 320 may be formed of a material such as Styrofoam or rubber.

The sound absorbing member 320 is accommodated in the filling space 140. In an embodiment in which the sound absorbing member 320 is provided as the urethane foam, the sound absorbing member 320 may be filled in the filling space 140 by spraying.

In an embodiment in which the sound absorbing member 320 is provided as a Styrofoam or rubber, the sound absorbing member 320 may be formed in a shape corresponding to the shape of a plurality of partitioned small spaces. In the above embodiment, the sound absorbing member 320 may be inserted and coupled to the plurality of small spaces, respectively.

The sound absorbing member 320 accommodated in the filling space 140 may be sealed to block any communication with the outside. In other words, in the illustrated embodiment, the left and right directions of the accommodated sound absorbing member 320 are surrounded by the first reinforcing rib 131. In addition, the upper and lower directions of the accommodated sound absorbing member 320 are surrounded by a sub-cover 312, and the front side thereof is surrounded by the main cover 311, and the rear side thereof is surrounded by the wall portion 110, that is, the first wall 111 in the illustrated embodiment.

Therefore, the vibration reduction unit 300 according to the present embodiment is configured to fill the sound absorbing member 320 in the filling space 140 formed between the reinforcing ribs 130 provided in the wall portion 110. The filled sound absorbing member 320 may absorb vibration or noise transmitted from the electrical connection unit 200. Accordingly, the amount of vibration or noise radiated to the outside of the transformer 10 can be reduced.

Furthermore, the filling space 140 is previously formed in the wall portion 110. Therefore, excessive design changes are not required to provide the vibration reduction unit 300 according to the present embodiment, and workability may be improved.

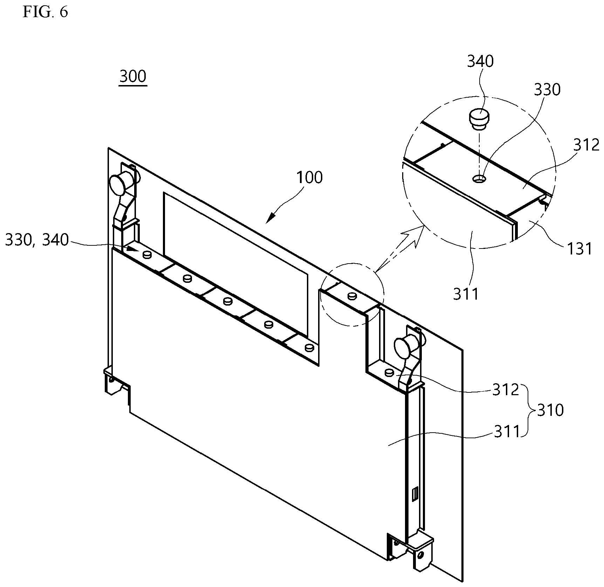

Referring to FIG. 6, a variation of the vibration reduction unit 300 according to the present embodiment is illustrated. In the present modified example, the vibration reduction unit 300 further includes a communication hole 330 and a closure member 340.

In the present modified example, the cover member 310 may be first coupled to the wall portion 110 and then the sound absorbing member 320 may be filled. The structure and function of the cover member 310 are the same as the cover member 310 according to the above embodiment, and a duplicate description thereof will be omitted below.

In the present modified example, the sound absorbing member 320 may be made of a material that is flexible but may be hardened after a predetermined period of time. In other words, in the present modified example, it may be assumed that the sound absorbing member 320 is provided as an urethane foam.

The communication hole 330 communicates the outside with the filling space 140, which is enclosed and sealed by the cover member 310. The communication hole 330 is formed through the cover member 310 and functions as a passage through which the sound absorbing member 320 may be injected. In the illustrated embodiment, the communication hole 330 is formed through the sub-cover 312 located on the upper side. Although not illustrated, the communication hole 330 may be formed through the sub-cover 312 located on the lower side.

The communication hole 330 may be formed in plural. The plurality of communication holes 330 may be formed through the plurality of sub-covers 312. In the embodiment illustrated in FIG. 6, a total of seven communication holes 330 are formed in each of the seven sub-covers 312.

Therefore, the worker may insert a gun or the like into the filling space 140 through the communication hole 330 and inject the sound absorbing member 320 by spraying the sound absorbing member 320.

When the injection of the sound absorbing member 320 is completed, the communication hole 330 must be closed to prevent the arbitrary exposure of the sound absorbing member 320. To this end, the vibration reduction unit 300 according to the present modification includes a closure member 340.

The closure member 340 is inserted into and coupled to the communication hole 330 to close the communication hole 330. Any external communication with the filling space 140 and the sound absorbing member 320 accommodated in the filling space 140 is blocked by the closure member 340.

The closure member 340 may be provided in plural. The plurality of closure members 340 may be inserted and coupled to the plurality of communication holes 330, respectively. In the embodiment illustrated in FIG. 6, seven closure members 340 are provided and inserted into each of the seven communication holes 330.

In the illustrated embodiment, the closure member 340 is formed by a plurality of cylinders having different cross-sectional areas continuously in the height direction thereof. The shape of the closure member 340 may be changed according to the shape of the communication hole 330.

As described above, in an embodiment in which the communication hole 330 is also formed in the sub-cover 312 located on the lower side, the closure member 340 may also be provided as many as the number of communication holes 330 formed in the sub-cover 312 on the lower side, and may block each communication hole 330.

According to the vibration reduction unit 300 of the present modified example, after the cover member 310 is first coupled to the wall portion 110, the sound absorbing member 320 may be filled in the cover member 310. At this time, the worker may install the vibration reduction unit 300 in a simple manner by injecting the sound absorbing member 320 into the filling space 140 using a member such as a gun, and then closing the communication hole 330 using the closure member 340.

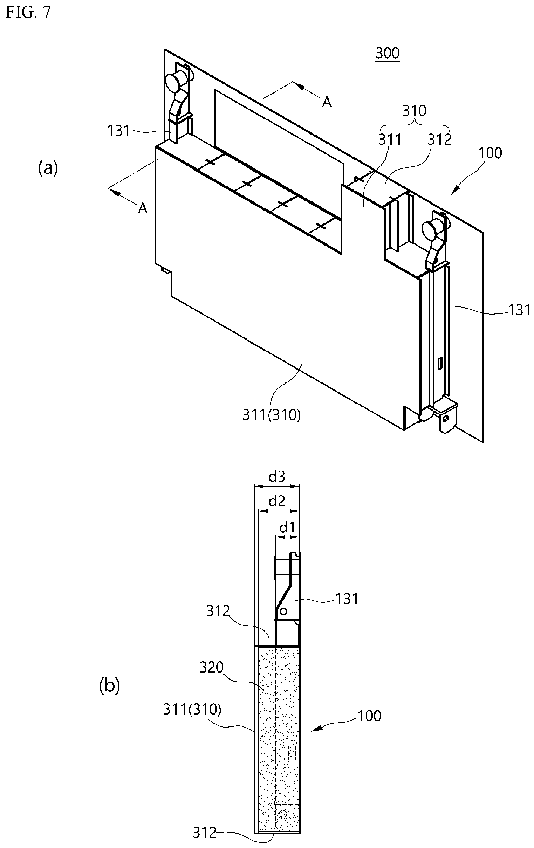

Referring to FIG. 7, another variation of the vibration reduction unit 300 according to the present embodiment is illustrated. In the present modified example, the cover member 310 may be first coupled to the wall portion 110 and then the sound absorbing member 320 may be filled. The structure and function of the cover member 310 are the same as the cover member 310 according to the above embodiment, and a duplicate description thereof will be omitted below.

In the present modified example, the sound absorbing member 320 may be made of a material that is flexible but may be hardened after a predetermined period of time. In other words, in the present modified example, it may be assumed that the sound absorbing member 320 is provided as an urethane foam.

In the present modified example, the main cover 311 is disposed to be spaced apart from the first reinforcing rib 131 in its thickness direction, that is, in the front and rear directions in the illustrated embodiment.

That is, referring to (b) of FIG. 7, the thickness of the first reinforcing rib 131 may be defined as a first distance d1, the thickness of the filled sound absorbing member 320 may be defined as a second distance d2, and the longest distance between the main cover 311 and the wall portion 110 may be defined as a third distance d3.

In the above embodiment, a difference between the second distance d2 and the first distance d1 may be understood as a distance between the main cover 311 and the first reinforcing rib 131. In this case, a difference between the third distance d3 and the second distance d2 may be understood as a thickness of the main cover 311.

Accordingly, a predetermined space is formed between a surface where the main cover 311 and the first reinforcing rib 131 face each other, that is, a rear side surface of the main cover 311 and a front side surface of the first reinforcing rib 131 in the illustrated embodiment. It will be understood that the predetermined space has a width equal to the difference between the first distance d1 and the second distance d2 between the main cover 311 and the first reinforcing rib 131.

Therefore, the plurality of small spaces where the filling space 140 is partitioned by the plurality of reinforcing ribs 130 may communicate with each other through the predetermined space. Accordingly, even when a single communication hole (not shown) is formed in the vibration reduction unit 300 according to the present modified example, the sound absorbing member 320 injected into any one small space through the communication hole (not shown) may flow to the other small space.

Accordingly, the manufacturing process of the vibration reduction unit 300 and the manufacturing process of coupling the vibration reduction unit 300 to the wall portion 110 may be simplified.

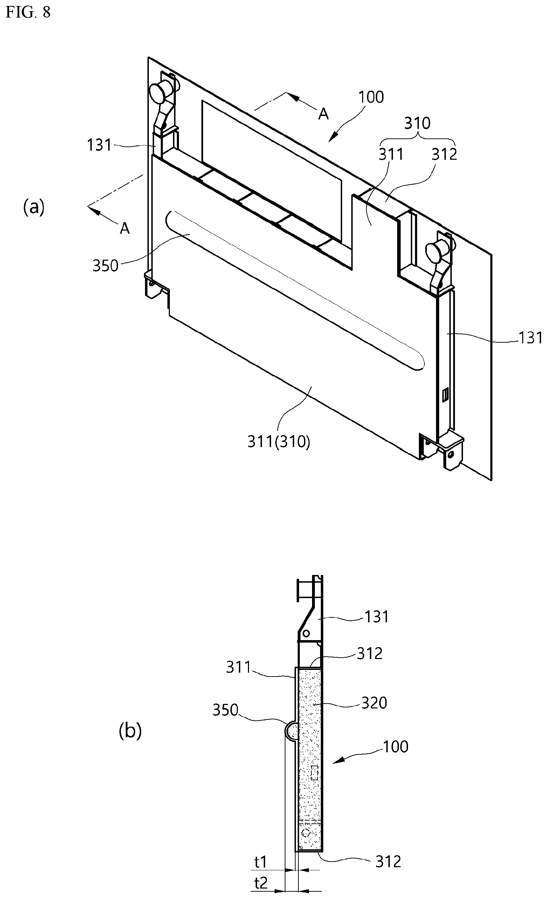

Referring to FIG. 8, another modified example of the vibration reduction unit 300 according to this embodiment is illustrated. In the present modified example, the vibration reduction unit 300 further includes a protruding flow path portion 350.

In the present modified example, the cover member 310 is first coupled to the wall portion 110 and then the sound absorbing member 320 may be filled. The structure and function of the cover member 310 are the same as those of the cover member 310 according to the above embodiment, and a duplicate description thereof will be omitted below.

In the present modified example, the sound absorbing member 320 may be made of a material that is flexible but may be hardened after a predetermined period of time. In other words, in the present modified example, it may be assumed that the sound absorbing member 320 is provided as an urethane foam.

In the present modified example, the main cover 311 is disposed adjacent to the first reinforcing rib 131. In an embodiment, the main cover 311 may be disposed to be in contact with the first reinforcing rib 131.

The main cover 311 is provided with a protruding flow path portion 350. The protruding flow path portion 350 protrudes to the outside of the main cover 311 and extends in one extending direction of the main cover 311. In the embodiment illustrated in FIG. 8, the protruding flow path portion 350 is formed to protrude to one side opposite the wall portion 110, that is, to the front side. The protruding flow path portion 350 is formed to extend in one extending direction of the main cover 311 and in the left and right directions in the illustrated embodiment.

An inner surface of the protruding flow path portion 350, that is, a surface facing the wall portion 110, may be recessed. That is, the inner side of the protruding flow path portion 350 is formed as a recessed space on a surface facing the wall portion 110 among the surfaces of the main cover 311. Therefore, the protruding flow path portion 350 may function as a flow path extending along the left and right directions of the main cover 311.

The protruding flow path portion 350 may communicate with each of the plurality of small spaces formed by partitioning the filling space 140. That is, the protruding flow path portion 350 may communicate with the small space formed at the outermost side of each end in the extending direction. In the illustrated embodiment, the left end of the protruding flow path portion 350 may communicate with the small space located at the leftmost side. The right end of the protruding flow path portion 350 may communicate with the small space located at the rightmost side.

Therefore, in the above embodiment, the sound absorbing member 320 injected into any one of the plurality of small spaces may flow to another small space through the protruding flow path portion 350. Accordingly, even when a single communication hole (not shown) is formed in the vibration reducing portion 300, the sound absorbing member 320 injected into any one small space through the communication hole (not shown) may flow to another small space.

In the illustrated embodiment, a single number of protruding flow path portions 350 are formed. Alternatively, a plurality of protruding flow path portions 350 may be formed and disposed to be spaced apart from each other in the height direction of the main cover 311.

Referring to (b) of FIG. 8, a thickness of the main cover 311 may be defined as a first thickness 11, and a protruding length of the protruding flow path portion 350 may be defined as a second thickness t2. That is, it will be understood that the second thickness t2 is a vertical distance between the inner surface of the main cover 311 and the outer end of the protruding flow path portion 350.

In the above embodiment, the second thickness t2 may be formed to be greater than or equal to the first thickness t1. A difference between the second thickness t2 and the first thickness t1 may be defined as the thickness of a space communicating the plurality of small spaces. The above description is the same as that the plurality of small spaces partitioned through the space formed inside the communicating portion 350 may communicate with each other so that the sound absorbing member 320 may flow.

Therefore, the plurality of small spaces in which the filling space 140 is partitioned by the plurality of reinforcing ribs 130 may be communicated with each other by the protruding flow path portion 350. Accordingly, even when a single communication hole (not shown) is formed in the vibration reducing portion 300 according to this modification, the sound absorbing member 320 injected into any one small space through the communication hole (not shown) may flow to the other small space.

Accordingly, the manufacturing process of the vibration reduction unit 300 and the manufacturing process of coupling the vibration reduction unit 300 to the wall portion 110 may be simplified.

4. Description of a vibration reduction unit 400 according to another embodiment of the present disclosure

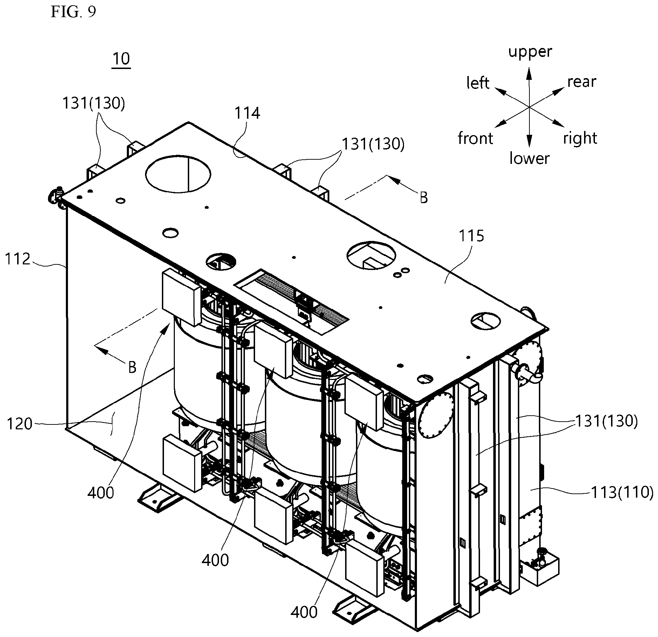

Referring to FIGS. 9 to 13, the transformer 10 according to another embodiment of the present disclosure includes a vibration reduction unit 400. The vibration reduction unit 400 according to the present embodiment is coupled to the housing 100 and the electrical connection unit 200, respectively, to reduce vibration or noise.

Specifically, the vibration reduction unit 400 is coupled to the iron core member 210 or the support frame 230 to reduce vibration or noise generated by the electrical connection unit 200. In addition, the vibration reduction unit 400 is configured to minimize the amount of vibration or noise generated by being coupled to the wall portion 110 of the housing 100 to be transmitted to the wall portion 110. Accordingly, the amount of vibration or noise radiated to the outside of the transformer 10 may be reduced.

The vibration reduction unit 400 is coupled to the wall portion 110. In this case, the vibration reduction unit 400 may be coupled to the wall portion 110 along a direction different from the extending direction of the iron core member 210. In the embodiment illustrated in FIG. 9, the iron core member 210 is formed to extend in the left and right directions. Accordingly, the vibration reduction unit 400 may extend in a direction different from the above direction, that is, in the front and rear directions in the illustrated embodiment.

In the above embodiment, the front end of the vibration reduction unit 400 is coupled to the first wall 111 located on the front side. In addition, the rear end of the vibration reduction unit 400 is coupled to the fourth wall 114 located on the rear side.

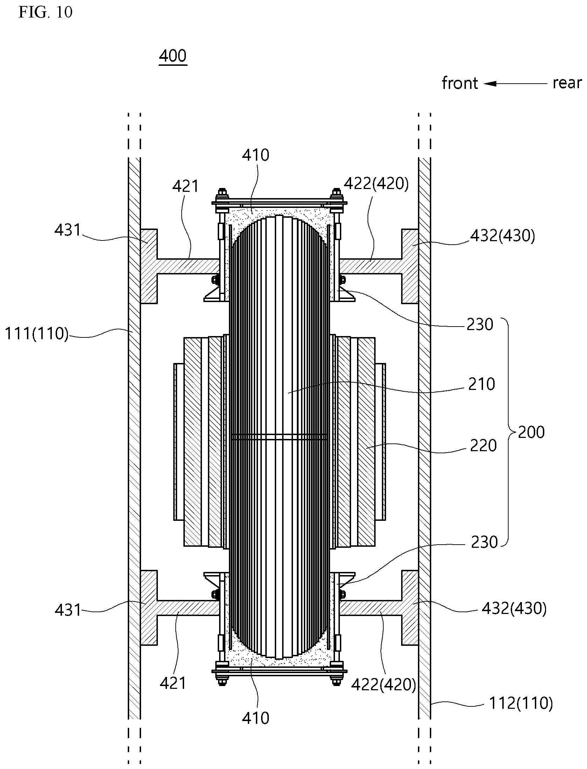

The vibration reduction unit 400 is coupled to the iron core member 210 and the support frame 230 of the electrical connection unit 200. In other words, in the embodiment illustrated in FIG. 10, the vibration reduction unit 400 includes one portion located between the iron core member 210 and the support frame 230 and the other portion coupled to the support frame 230.

The vibration reduction unit 400 may be provided in plural. The plurality of vibration reduction units 400 may be disposed to be spaced apart from each other along an extending direction of the iron core member 210. In the embodiment illustrated in FIG. 9, the vibration reduction unit 400 is provided in total of six, including three located on the upper side and spaced apart from each other in the front and rear directions, and three located on the lower side and spaced apart from each other in the front and rear directions.

The number and arrangement method of the vibration reduction unit 400 may be changed.

In the illustrated embodiment, the vibration reduction unit 400 includes an iron core support member 410, a transmission member 420, a housing coupling member 430, and an elastic member 440.

The iron core support member 410 is coupled to the iron core member 210 and the support frame 230 to reduce vibration or noise generated by the iron core member 210. The iron core support member 410 is positioned between the iron core member 210 and the support frame 230.

The iron core support member 410 may be coupled to the iron core member 210 and the support frame 230, respectively, and may be provided in any form that can reduce vibration or noise transmitted from the iron core member 210 to the support frame 230. In an embodiment, the core support member 410 may be formed of a cork or rubber material.

In the illustrated embodiment, the iron core support member 410 is disposed to surround a portion of the outer side of the iron core member 210, that is, the upper outer circumference of the iron core member 210 located on the upper side and the lower outer circumference of the iron core member 210 located on the lower side. Alternatively, the iron core support member 410 may be disposed to surround the width direction of the iron core member 210, that is, the front and rear directions in the illustrated embodiment.

The core support member 410 is surrounded by the support frame 230. In the embodiment illustrated in FIGS. 10 to 13, the iron core support member 410 is formed such that the front side and the rear side thereof are surrounded by the support frame 230.

The iron core support member 410 may be provided in plural. The plurality of iron core support members 410 may be coupled to the iron core member 210 and the support frame 230 at different positions. In the embodiment illustrated in FIGS. 10 to 13, the core support member 410 is located adjacent to the upper and lower sides of the iron core member 210, respectively.

The iron core support member 410 is coupled to the transmission member 420 through the support frame 230.

The transmission member 420 transmits vibration or noise from the iron core member 210 to the support frame 230. In this case, the transmission member 420 may absorb vibration or noise of a predetermined size and reduce vibration or noise transmitted to the housing 100.

The transmission member 420 is coupled to the wall portion 110 and the support frame 230, respectively. The transmission member 420 is continuous between the wall portion 110 and the support frame 230. As will be described later, the wall portion 110 is provided with a housing coupling member 430, and the transmission member 420 may be said to be coupled to the support frame 230 and the housing coupling member 430, respectively.

The transmission member 420 is formed to extend in the width direction of the iron core member 210, that is, in the front and rear directions in the illustrated embodiment. One end of the transmission member 420 in the extending direction is coupled to the housing coupling member 430 provided in the wall portion 110. The other end of the transmission member 420 in the extending direction is coupled to the support frame 230.

The transmission member 420 may be formed of a rigid body. The transmission member 420 may transmit vibration or noise transmitted from the iron core member 210 and the support frame 230 to the wall portion 110 of the housing 100.

The transmission member 420 may be provided in plural. The plurality of transmission members 420 may be coupled to the support frame 230 and the housing coupling members 430 at different positions. In the illustrated embodiment, the transmission member 420 is located adjacent to the upper side and the lower side of the iron core member 210, respectively.

The transmission member 420 may be coupled to a single number of support frames 230 at different positions. That is, the support frame 230 may be coupled to the transmission member 420 at a plurality of points.

In the illustrated embodiment, the transmission member 420 includes a first transmission member 421 positioned on front side of the support frame 230 and a second transmission member 422 positioned on rear side of the support frame 230.

The first transmission member 421 connects one side of the support frame 230 and one wall portion 110. In the illustrated embodiment, the first transmission member 421 is coupled to the front side of the support frame 230 and the first coupling member 431 coupled to the first wall 111, respectively.

The first transmission member 421 extends between the front side of the support frame 230 and the first coupling member 431. In the illustrated embodiment, the first transmission member 421 extends in the front and rear directions such that the front end thereof is coupled to the first coupling member 431 and the rear end thereof is coupled to the front side surface of the support frame 230.

The second transmission member 422 connects the other side of the support frame 230 to the other wall portion 110. In the illustrated embodiment, the second transmission member 422 is coupled to the rear side of the support frame 230 and the second coupling member 432 coupled to the fourth wall 114, respectively.

The second transmission member 422 extends between the rear side of the support frame 230 and the second coupling member 432. In the illustrated embodiment, the second transmission member 422 extends in the front and rear directions such that the front end thereof is coupled to the rear side surface of the support frame 230, and the rear side end thereof is coupled to the second coupling member 432.

The first transmission member 421 and the second transmission member 422 are disposed to face each other with the electrical connection unit 200 interposed therebetween.

The vibration or noise transmitted through the transmission member 420 is transmitted to the housing coupling member 430.

The housing coupling member 430 is configured to reduce vibration or noise transmitted through the transmission member 420. The housing coupling member 430 may minimize vibration or noise transmitted to the housing 100, specifically, the wall portion 110. Accordingly, vibration or noise radiated from the wall portion 110 to the outside of the transformer 10 may also be reduced.

The housing coupling member 430 is coupled to the housing 100. Specifically, the housing coupling member 430 is coupled to the inner surface of the wall portion 110. The housing coupling member 430 is accommodated in the accommodation space 120 of the housing 100 and is not exposed to the outside.

The housing coupling member 430 may be provided in plural. The plurality of housing coupling members 430 may be coupled to the inner surfaces of the different wall portions 110. In the embodiment illustrated in FIGS. 10 to 13, the housing coupling member 430 is coupled to the first wall 111 located on the front side and the fourth wall 114 located on the rear side, respectively.

The plurality of housing coupling members 430 may be disposed to be spaced apart along the other direction in which the iron core member 210 extends. In the embodiment illustrated in FIGS. 10 to 13, the housing coupling members 430 are disposed to be spaced apart from each other on the upper side and the lower side along the vertical direction.

The housing coupling member 430 disposed on the upper side is coupled to the transmission member 420 located on the upper side and the housing coupling member 430 disposed on the lower side is coupled to the transmission member 420 located on the lower side.

The housing coupling member 430 may be formed of any material capable of reducing vibration or noise transmitted from the transmission member 420. In an embodiment, the housing coupling member 430 may be made of urethane foam, cork, or rubber material.

The housing coupling member 430 may be any arbitrary shape capable of reducing vibrations or noise transmitted by being coupled to the wall portion 110 and the transmission member 420, respectively. In the illustrated embodiment, the housing coupling member 430 has a polygonal column shape including a pair of surfaces respectively coupled to the wall portion 110 and the transmission member 420 and disposed to face each other.

In the illustrated embodiment, the housing coupling member 430 includes a first coupling member 431 and a second coupling member 432.

The first coupling member 431 is biased to one side with respect to the electrical connection unit 200. In the illustrated embodiment, the first coupling member 431 is biased toward the front side. The first coupling member 431 is coupled to the first wall 111 located on the front side and the first transmission member 421 biased to the front side, respectively.

The second coupling member 432 is biased to the other side with respect to the electrical connection unit 200.

The second coupling member 432 is disposed to face the first coupling member 431 with the electrical connection unit 200 interposed therebetween. In the illustrated embodiment, the second coupling member 432 is biased toward the rear side. The second coupling member 432 is coupled to the fourth wall 114 located on the rear side and the second transmission member 422 biased to the rear side, respectively.

Therefore, the vibration reduction unit 400 according to the present embodiment may first reduce vibration or noise generated in the electrical connection unit 200 by the iron core support member 410 and then transmit the vibration or noise to the housing coupling member 430 through the transmission member 420.

In addition, the transmitted vibration or noise are again reduced by the housing coupling member 430 and then transmitted to the wall portion 110. Accordingly, the amount of vibration or noise generated from the electrical connection unit 200 radiated to the outside of the transformer 10 may be reduced.

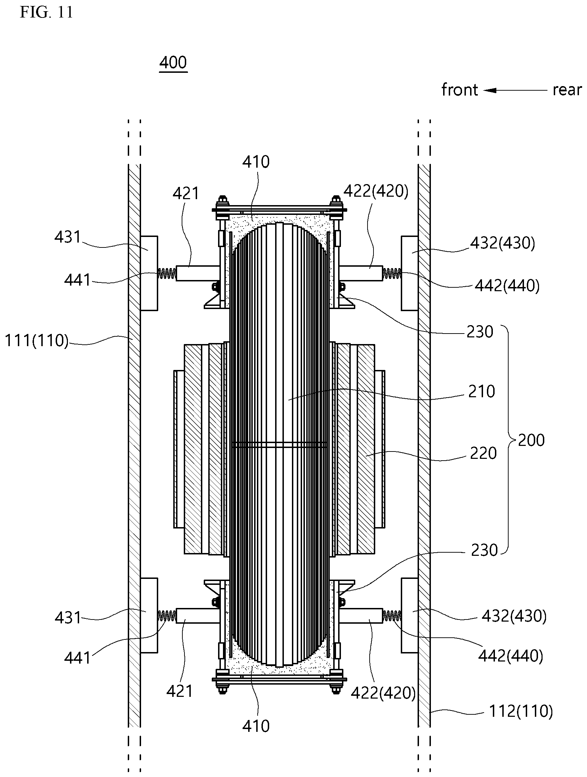

Referring to FIG. 11, a modified example of the vibration reduction unit 400 according to the present embodiment is illustrated. In the present modified example, the vibration reduction unit 400 further includes an elastic member 440.

In the present modified example, the support frame 230 and the housing coupling member 430 may be connected by a plurality of members. That is, in the present modified example, the support frame 230 and the housing coupling member 430 are connected by the transmission member 420 and the elastic member 440.

In the present modified example, the structure and function of the iron core support member 410 and the housing coupling member 430 are the same as the above-described embodiment, and a duplicate description thereof will be omitted below.

The elastic member 440 is located between the support frame 230 and the transmission member 420 or between the transmission member 420 and the housing coupling member 430. In the illustrated embodiment, the elastic member 440 is located between the transmission member 420 and the housing coupling member 430.

The elastic member 440 extends between the transmission member 420 and the housing coupling member 430. One end of the elastic member 440 in its extending direction may be coupled to the transmission member 420, and the other end thereof may be coupled to the housing coupling member 430.

The elastic member 440 may be provided in any form capable of shape deformation by a predetermined amount and reducing applied vibration or noise. That is, the elastic member 440 may be formed to have a predetermined elasticity. In the illustrated embodiment, the elastic member 440 is provided as a coil spring.

The elastic member 440 may be coupled to the transmission member 420 and the housing coupling member 430 at a plurality of positions, respectively. In the illustrated embodiment, the elastic member 440 is located adjacent to the upper side and the lower side of the iron core member 210, respectively.

The elastic member 440 may be provided in plural. The plurality of elastic members 440 may be configured to support a single support frame 230 in different directions. In the illustrated embodiment, the elastic member 440 includes a first elastic member 441 located on the front side and a second elastic member 442 located on the rear side. The first elastic member 441 and the second elastic member 442 are disposed to face each other with the electrical connection unit 200 interposed therebetween.

The first elastic member 441 is coupled to the first transmission member 421 and the first coupling member 431 located on the front side, respectively. The first elastic member 441 extends between the first transmission member 421 and the first coupling member 431.

One end of the first elastic member 441 in the extending direction, that is, the front end in the illustrated embodiment, are coupled to the first coupling member 431. The other end of the first elastic member 441 in the extending direction, that is, the rear end in the illustrated embodiment, are coupled to the first transmission member 421.

The first elastic member 441 elastically supports the support frame 230 and the first transmission member 421. The vibration or noise generated by the electrical connection unit 200 may be reduced by the first elastic member 441 and may be transmitted to the first transmission member 421.

In the above embodiment, the first elastic member 441 may be deformed in its extending direction, that is, in the left and right directions, and may reduce vibration or noise. That is, the first elastic member 441 may function as a damper in the front and rear directions.

The second elastic member 442 is coupled to the second transmission member 422 and the second coupling member 432 located on the rear side, respectively. The second elastic member 442 extends between the second transmission member 422 and the second coupling member 432.

One end of the second elastic member 442 in the extending direction, that is, the front end in the illustrated embodiment, are coupled to the second transmission member 422. The other end of the second elastic member 442 in the extending direction, that is, the rear end in the illustrated embodiment, are coupled to the second coupling member 432.

The second elastic member 442 elastically supports the support frame 230 and the second transmission member 422. The vibration or noise generated by the electrical connection unit 200 may be reduced by the second elastic member 442 and may be transmitted to the second transmission member 422.

In the above embodiment, the second elastic member 442 may be deformed in its extending direction, that is, in the left and right directions, and may reduce vibration or noise. That is, the second elastic member 442 may function as a damper in the front and rear directions.

Therefore, according to the vibration reduction unit 400 of the present embodiment, vibration or noise generated in the electrical connection unit 200 may be primarily reduced by the iron core support member 410, be transmitted through the elastic member 440, be again reduced, and be transmitted to housing coupling member 430.

In addition, the transmitted vibration or noise are again reduced by the housing coupling member 430 and then transmitted to the wall portion 110. Accordingly, the amount of vibration or noise generated from the electrical connection unit 200 radiated to the outside of the transformer 10 may be reduced.

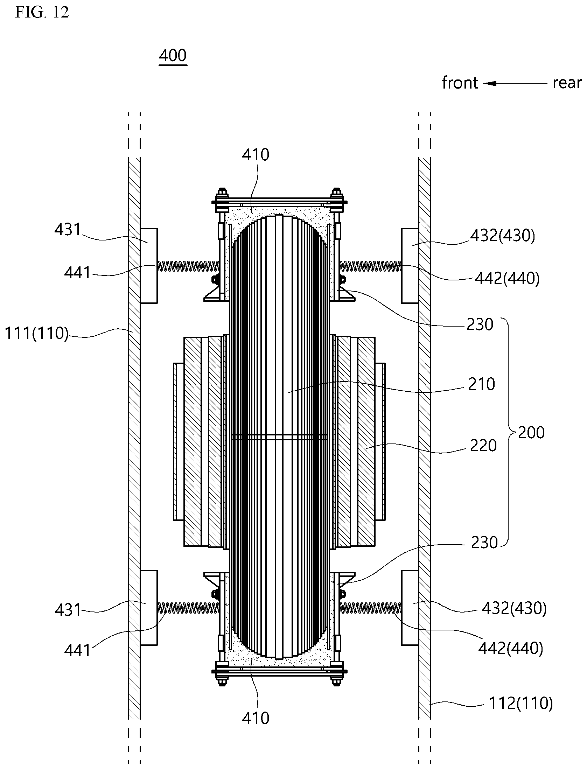

Referring to FIG. 12, another modified example of the vibration reduction unit 400 according to the present embodiment is illustrated. In the present modified example, the vibration reduction unit 400 further includes the elastic member 440.

In the present modified example, the support frame 230 and the housing coupling member 430 may be connected by the elastic member 440. In other words, in the present modified example, the transmission member 420 is not separately provided, and the support frame 230 and the housing coupling member 430 are connected by the elastic member 440 only.

In the present modified example, the structure and function of the iron core support member 410 and the housing coupling member 430 are the same as the above-described embodiment, and a duplicate description thereof will be omitted below.

In the present modified example, the elastic member 440 is located between the support frame 230 and the housing coupling member 430. The elastic member 440 extends between the support frame 230 and the housing coupling member 430. One end of the elastic member 440 in the extending direction may be coupled to the support frame 230, and the other end may be coupled to the housing coupling member 430.

The elastic member 440 may be deformed in a predetermined shape and may be provided in an arbitrary shape capable of reducing applied vibration or noise. That is, the elastic member 440 may be formed to have a predetermined elasticity. In the illustrated embodiment, the elastic member 440 is provided as a coil spring.

The elastic member 440 may be coupled to the support frame 230 and the housing coupling member 430 at a plurality of positions, respectively. In the illustrated embodiment, the elastic member 440 is located adjacent to the upper side and the lower side of the iron core member 210, respectively.

The elastic member 440 may be provided in plural. The plurality of elastic members 440 may be configured to support a single support frame 230 in different directions. In the illustrated embodiment, the elastic member 440 includes a first elastic member 441 located on the front side and a second elastic member 442 located on the rear side. The first elastic member 441 and the second elastic member 442 are disposed to face each other with the electrical connection unit 200 interposed therebetween.

The first elastic member 441 is coupled to the front side of the support frame 230 and the first coupling member 431, respectively. The first elastic member 441 extends between the support frame 230 and the first coupling member 431.

One end of the first elastic member 441 in the extending direction, that is, the front end in the illustrated embodiment, are coupled to the first coupling member 431. The other end of the first elastic member 441 in the extending direction, that is, the rear end in the illustrated embodiment, are coupled to the support frame 230.

The first elastic member 441 elastically supports the support frame 230 and the first coupling member 431. The vibration or noise generated by the electrical connection unit 200 may be reduced by the first elastic member 441 and may be transmitted to the first coupling member 431.

In the above embodiment, the first elastic member 441 may be deformed in its extending direction, that is, in the left and right directions, and may reduce vibration or noise. That is, the first elastic member 441 may function as a damper in the front and rear directions.

The second elastic member 442 is coupled to the support frame 230 and the second coupling member 432 located at the rear side, respectively. The second elastic member 442 extends between the support frame 230 and the second coupling member 432.

One end of the second elastic member 442 in the extending direction, that is, the front end in the illustrated embodiment, are coupled to the support frame 230. The other end of the second elastic member 442 in the extending direction, that is, the rear end in the illustrated embodiment, are coupled to the second coupling member 432.

The second elastic member 442 elastically supports the support frame 230 and the second coupling member 432. The vibration or noise generated by the electrical connection unit 200 may be reduced by the second elastic member 442 and may be transmitted to the second coupling member 432.

In the above embodiment, the second elastic member 442 may be deformed in its extending direction, that is, in the left and right directions, and may reduce vibration or noise. That is, the second elastic member 442 may function as a damper in the front and rear directions.

Therefore, according to the vibration reduction unit 400 of the present embodiment, vibration or noise generated in the electrical connection unit 200 may be primarily reduced by the iron core support member 410, be transmitted through the elastic member 440, be again reduced, and be transmitted to housing coupling member 430.

In addition, the transmitted vibration or noise are again reduced by the housing coupling member 430 and then transmitted to the wall portion 110. Accordingly, the amount of vibration or noise generated from the electrical connection unit 200 radiated to the outside of the transformer 10 may be reduced.

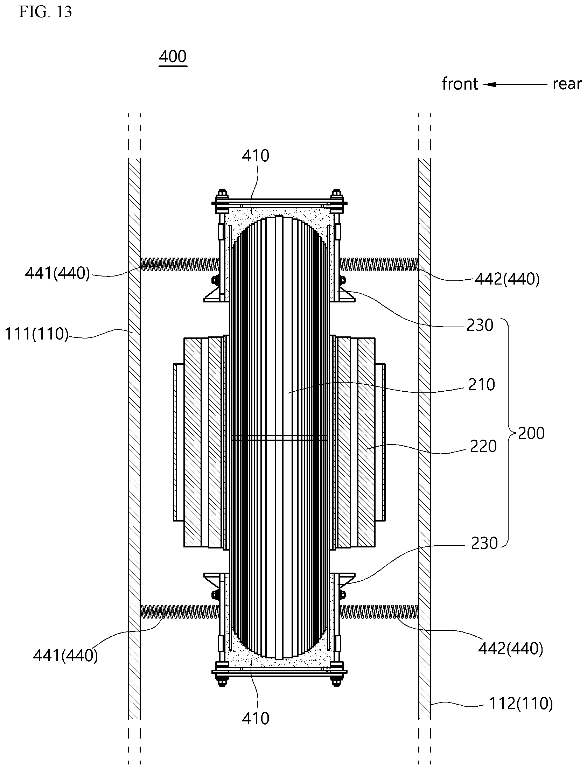

Referring to FIG. 13, another modified example of the vibration reduction unit 400 according to the present embodiment is illustrated. In the present modified example, the vibration reduction unit 400 further includes the elastic member 440.

In the present modified example, the support frame 230 and the wall portion 110 may be connected by the elastic member 440. In other words, in the present modified example, the transmission member 420 and the housing coupling member 430 are not separately provided, and the support frame 230 and the wall portion 110 are connected by the elastic member 440 only.

In the present modified example, the structure and function of the iron core support member 410 and the housing coupling member 430 are the same as the above-described embodiment, and a duplicate description thereof will be omitted below.

In the present modified example, the elastic member 440 is located between the support frame 230 and the wall portion 110. The elastic member 440 extends between the support frame 230 and the wall portion 110. One end of the elastic member 440 in the extending direction may be coupled to the support frame 230, and the other end may be coupled to the wall portion 110.

The elastic member 440 may be deformed in a predetermined shape and may be provided in an arbitrary shape capable of reducing applied vibration or noise. That is, the elastic member 440 may be formed to have a predetermined elasticity. In the illustrated embodiment, the elastic member 440 is provided as a coil spring.

The elastic member 440 may be coupled to the support frame 230 and the wall portion 110 at a plurality of positions, respectively. In the illustrated embodiment, the elastic member 440 is located adjacent to the upper side and the lower side of the iron core member 210, respectively.

The elastic member 440 may be provided in plural. The plurality of elastic members 440 may be configured to support a single support frame 230 in different directions. In the illustrated embodiment, the elastic member 440 includes a first elastic member 441 located on the front side and a second elastic member 442 located on the rear side. The first elastic member 441 and the second elastic member 442 are disposed to face each other with the electrical connection unit 200 interposed therebetween.

The first elastic member 441 is coupled to the first wall 111 and the first coupling member 431 located at the front side, respectively. The first elastic member 441 extends between the first wall 111 and the first coupling member 431.

One end of the first elastic member 441 in the extending direction, that is, the front end in the illustrated embodiment, are coupled to the first wall 111. The other end of the first elastic member 441 in the extending direction, that is, the rear end in the illustrated embodiment, are coupled to the support frame 230.

The first elastic member 441 elastically supports the support frame 230 and the first wall 111. The vibration or noise generated by the electrical connection unit 200 may be reduced by the first elastic member 441 and may be transmitted to the first wall 111.

In the above embodiment, the first elastic member 441 may be deformed in its extending direction, that is, in the left and right directions, and may reduce vibration or noise. That is, the first elastic member 441 may function as a damper in the front and rear directions.

The second elastic member 442 is coupled to the support frame 230 and the fourth wall 114 located at the rear side, respectively. The second elastic member 442 extends between the support frame 230 and the fourth wall 114.

One end of the second elastic member 442 in the extending direction, that is, the front end in the illustrated embodiment, are coupled to the support frame 230. The other end of the second elastic member 442 in the extending direction, that is, the rear end in the illustrated embodiment, are coupled to the fourth wall 114.

The second elastic member 442 elastically supports the support frame 230 and the fourth wall 114. The vibration or noise generated in the electrical connection unit 200 may be reduced by the second elastic member 442 and may be transmitted to the fourth wall 114.

In the above embodiment, the second elastic member 442 may be deformed in its extending direction, that is, in the left and right directions, and may reduce vibration or noise. That is, the second elastic member 442 may function as a damper in the front and rear directions.

Therefore, according to the vibration reduction unit 400 of the present embodiment, vibration or noise generated in the electrical connection unit 200 may be primarily reduced by the iron core support member 410, be transmitted through the elastic member 440, be again reduced, and be transmitted to the wall portion 110. Accordingly, the amount of vibration or noise generated from the electrical connection unit 200 radiated to the outside of the transformer 10 may be reduced.

5. Description of a vibration reduction unit 500 according to still another embodiment of the present disclosure

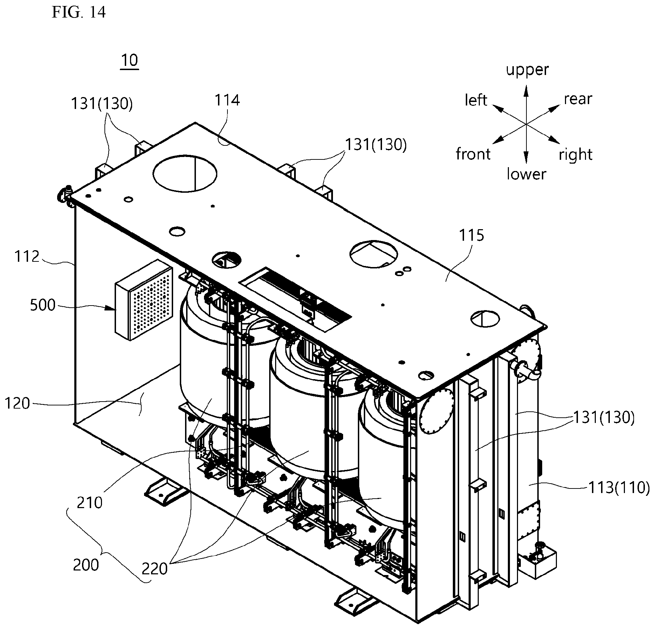

Referring to FIGS. 14 to 20, the transformer 10 according to still another embodiment of the present disclosure includes a vibration reduction unit 500. The vibration reduction unit 500 according to this embodiment is coupled to the housing 100 to reduce the vibration or noise transmitted thereto.

Specifically, the vibration reduction unit 500 is coupled to the wall portion 110 of the housing 100 to reduce vibration or noise generated by the electrical connection unit 200 and transmitted to the housing 100.

The vibration reduction unit 500 is received in the accommodation space 120 and is coupled to the inner surface of the wall portion 110. The vibration reduction units 500 is provided in plural, and the plurality of vibration reduction units 500 may be provided on one or more of first to fifth walls 111, 112, 113, 114, and 115 surrounding the accommodation space 120. In addition, the vibration reduction unit 500 may be provided on a lower wall not shown.

In the embodiment illustrated in FIG. 14, the vibration reduction unit 500 is coupled to the inner surface of the second wall 112 located on the left side.

The vibration reduction unit 500 is not in direct contact with the electrical connection unit 200. That is, the vibration reduction unit 500 is configured to reduce vibration or noise transmitted using a fluid in the accommodation space 120, for example, air as a medium. In an embodiment, the vibration reduction unit 500 may reduce the generated vibration or noise using a resonance phenomenon. In the above embodiment, the vibration reduction unit 500 may be defined as a resonator.

In the illustrated embodiment, the vibration reduction unit 500 includes a first frame 510, a second frame 520, a pipe member 530, a through-hole 540, a resonance space 550, and a partition wall 560.

The first frame 510 forms a portion of the exterior of the vibration reduction unit 500. The first frame 510 is coupled to the second frame 520 to form the exterior of the vibration reduction unit 500. The first frame 510 may be separably coupled with the second frame 520 in the height direction of the vibration reduction unit 500, that is, in the vertical direction in the illustrated embodiment.

In the illustrated embodiment, the first frame 510 is located above the second frame 520 and is formed to cover the resonance space 550 formed inside the second frame 520. Accordingly, the first frame 510 may be defined as a cover of the vibration reduction unit 500.

The first frame 510 is a portion where the vibration reduction unit 500 is exposed to the accommodation space 120. The first frame 510 is a portion of the vibration reduction unit 500 facing the accommodation space 120. In other words, the first frame 510 is positioned toward the electrical connection unit 200. The first frame 510 is disposed to face the wall portion 110 with the second frame 520 interposed therebetween.

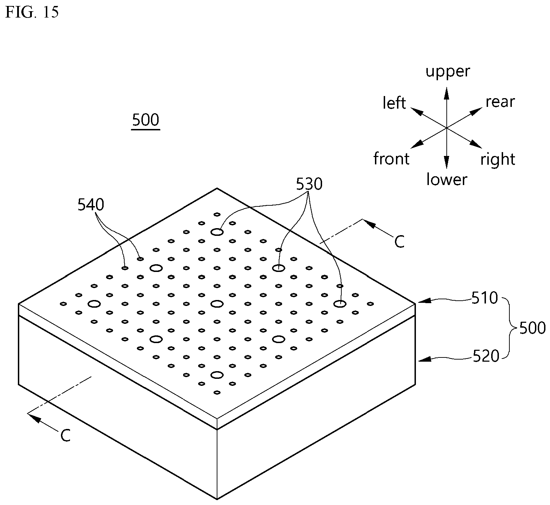

The pipe member 530 is penetratively coupled to the inside of the first frame 510. The pipe member 530 may extend in the thickness direction of the first frame 510 inside the first frame 510, that is, in the vertical direction in the embodiment illustrated in FIG. 15.

A through-hole 540 is formed through the inside the first frame 510. The through-hole 540 is positioned adjacent to the pipe member 530 to reduce the transmitted vibration or noise together with the pipe member 530.

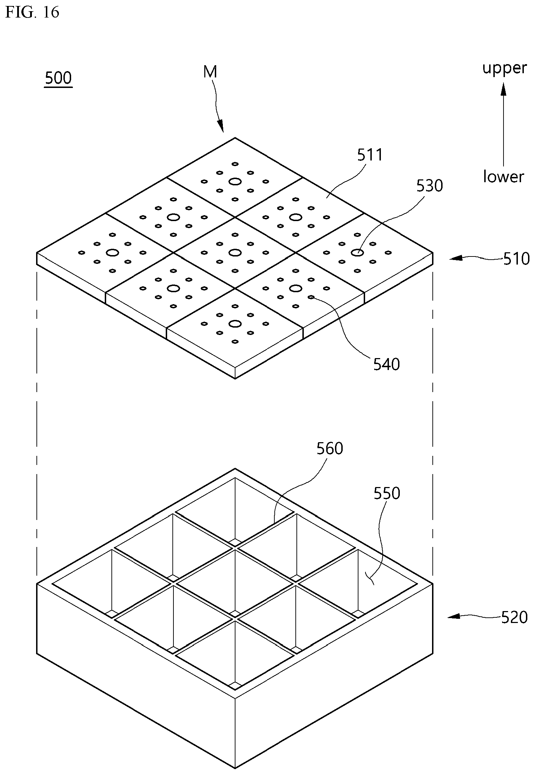

The first frame 510 may be partitioned into a plurality of regions. In the embodiment illustrated in FIG. 16, the first frame 510 may be formed by a plurality of modules M. In the above embodiment, the plurality of modules M are provided three each in the front and rear directions and in the left and right directions, so that a total of nine modules M may form a first frame 510.

The first frame 510 may have an arbitrary shape in which the pipe member 530 is penetratively coupled therein, the through-hole 540 is penetrated and formed, and may be coupled to the second frame 520. In the illustrated embodiment, the first frame 510 has a rectangular cross-section and is formed in a plate shape having a thickness in the vertical direction.

In the illustrated embodiment, the first frame 510 includes a first surface 511 and a second surface 512.

The first surface 511 forms one surface of the surface of the first frame 510 facing the electrical connection unit 200, that is, an upper surface in the illustrated embodiment. The first surface 511 is a portion where the first frame 510 is exposed to the accommodation space 120.

A second surface 512 is formed opposite the first surface 511.

The second surface 512 forms the other surface of the surface of the first frame 510 opposite to the electrical connection unit 200, that is, a lower surface in the illustrated embodiment. The second surface 512 is a portion where the first frame 510 is not exposed to the accommodation space 120. In other words, the second surface 512 may be defined as a surface of the first frame 510 facing the second frame 520.

The first surface 511 and the second surface 512 may be spaced apart from each other by a predetermined distance. The length of the through-hole 540 may be determined according the distance between the first surface 511 and the second surface 512. As will be described later, the frequency of vibration or noise that may be offset through resonance may be adjusted according to the length of the through-hole 540.

That is, the thickness of the first frame 510 may be adjusted to adjust the frequency of vibration or noise that may offset by the through-hole 540. This will be described later in detail.

The second frame 520 forms another portion of the exterior of the vibration reduction unit 500. The second frame 520 is coupled to the first frame 510 to form the exterior of the vibration reduction unit 500. The second frame 520 may be detachably coupled to the first frame 510 in the height direction of the vibration reduction unit 500, that is, a vertical direction in the illustrated embodiment.

In the illustrated embodiment, the second frame 520 is located below the first frame 510. Accordingly, the second frame 520 may be defined as a body of the vibration reduction unit 500.

The second frame 520 is a portion where the vibration reduction unit 500 is coupled to the wall portion 110. The second frame 520 is a portion of the vibration reduction unit 500 facing the wall portion 110. In other words, the second frame 520 is positioned opposite to the electrical connection unit 200. The second frame 520 is disposed to face the electrical connection unit 200 with the first frame 510 interposed therebetween.

Inside the second frame 520, a plurality of resonance spaces 550 for reducing the transmitted vibration or noise and the partition wall 560 for partitioning the plurality of resonance spaces 550 are disposed. The plurality of partitioned resonance spaces 550 may overlap the plurality of modules M forming the first frame 510 in the stacking direction thereof, that is, in the vertical direction in the illustrated embodiment. In other words, a singular module M may be disposed to overlap a singular resonance space 550.

The second frame 520 may have an arbitrary shape capable of reducing transmitted vibration or noise by accommodating the resonance space 550 and the partition wall 560 therein. In the illustrated embodiment, the second frame 520 is a rectangular pillar shape that has a quadrangular cross-section and has a thickness in the vertical direction. The shape of the second frame 520 may be changed according to the shape of the first frame 510.

In the illustrated embodiment, the second frame 520 includes a frame outer circumference 521, a frame surface 522, and a fastening hole 523.

The frame outer circumference 521 forms the outer circumference of the second frame 520. The frame outer circumference 521 surrounds a plurality of resonance spaces 550 from the outside. The frame outer circumference 521 may be formed in a shape corresponding to the second frame 520. In the illustrated embodiment, the second frame 520 has a rectangular pillar shape, and the frame outer circumference 521 may be formed to have a rectangular cross-section.

The frame outer circumference 521 may be aligned with the outer circumference of the first frame 510. That is, the outer circumference of the first frame 510 and the frame outer circumference 521 may be disposed on the same surface along the outer circumference thereof.

The frame outer circumference 521 is continuous with the frame surface 522.

The frame surface 522 forms one surface of the second frame 520 and a lower surface in the illustrated embodiment. The frame surface 522 is disposed to face the first frame 510 with the resonance space 550 interposed therebetween. The frame surface 522 surrounds the resonance space 550 in another directions, from the bottom in the embodiment shown.

The frame surface 522 is a portion where the second frame 520 is coupled to the housing 100. That is, the frame surface 522 is coupled to the wall portion 110. To this end, the outer side of the frame surface 522 may be formed in the same shape as the inner surface of the wall portion 110.

A fastening hole 523 is formed through the inside of the frame surface 522.

The fastening hole 523 is a space through which a fastening member (not shown) for coupling the second frame 520 to the wall portion 110 passes. The fastening hole 523 is formed through the inside of the frame surface 522.

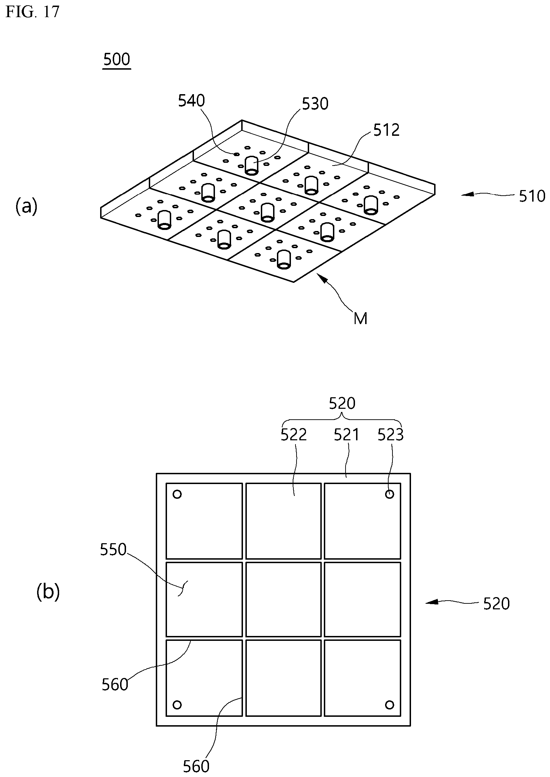

The fastening hole 523 may be formed in plural. The plurality of fastening holes 523 may be disposed at different positions of the frame surface 522. In the embodiment illustrated in (b) of FIG. 17, four fastening holes 523 are provided. The four fastening holes 523 are located adjacent to each corner of the frame surface 522 having a rectangular cross-section.

At this time, the four fastening holes 523 are located inside the outer circumference 521 of the frame, so that the fastening member (not shown) coupled to the fastening holes 523 is not exposed to the outside. Accordingly, disturbance of vibration or noise transmitted to the vibration reduction unit 500 is minimized, so that the vibration reduction unit 500 may effectively reduce vibration or noise of a preset frequency.

The fastening holes 523 may be aligned with a plurality of through-holes (not shown) formed in the wall portion 110. In other words, the fastening hole 523 and the through-hole (not shown) may be formed to have the same central axis.

The pipe member 530 substantially plays a role in reducing vibration or noise by the vibration reduction unit 500. The vibration or noise generated in the electrical connection unit 200 passes through the inside of the pipe member 530 and proceeds to the resonance space 550, which may be reduced by means of resonance.

The pipe member 530 is coupled to the first frame 510. Specifically, the pipe member 530 may be penetratively coupled to the inside of the first frame 510 through.

The pipe member 530 may extend by a predetermined length. The extending length of the pipe member 530 may be formed to be greater than or equal to the thickness of the first frame 510, that is, the length in which the first surface 511 and the second surface 512 are spaced apart from each other. Accordingly, at least one end of the pipe member 530 in the extending direction may protrude in the thickness direction of the first frame 510.

In the illustrated embodiment, the pipe member 530 has a lower end protruding in the thickness direction of the first frame 510. The end of the pipe member 530 is accommodated in the resonance space 550.

Alternatively, the pipe member 530 may have an upper end protruding in the thickness direction of the first frame 510. In the above embodiment, the end of the pipe member 530 may be located in the accommodation space 120.

Alternatively, the pipe member 530 may have both its upper end and its lower end protruding in the thickness direction of the first frame 510. In the above embodiment, it will be understood that the upper end of the pipe member 530 is accommodated in the accommodation space 120, and the lower end of the pipe member 530 is accommodated in the resonance space 550.

The pipe member 530 may be provided in plural. The plurality of pipe members 530 may be disposed in a plurality of modules M that partition the first frame 510, respectively. In the illustrated embodiment, nine pipe members 530 are provided and are disposed in each of nine modules M.

At this time, as described above, the plurality of modules M are disposed to cover each of the plurality of resonance spaces 550. Therefore, in an embodiment in which the end of the pipe member 530 protrudes downward, each end of the plurality of pipe members 530 may be located in a plurality of resonance spaces 550, respectively.

The pipe member 530 may be disposed at an arbitrary position inside the module M. In the embodiment shown, the pipe member 530 is disposed at the center of the module M. In the above embodiment, the center of the pipe member 530 and the center of the module M may be disposed on the same axis.

A hollow is formed inside the pipe member 530. The hollow may communicate the accommodation space 120 with the resonance space 550 to function as a passage through which vibration or noise may progress.

The pipe member 530 is formed to have a predetermined cross-section. In the illustrated embodiment, the pipe member 530 has a circular cross-section, and is formed to have a ring-shaped cross-section through which a hollow is formed.

The extending length of the pipe member 530 and the cross-sectional area of the hollow may act as a factor of the resonance frequency generated by the vibration reduction unit 500. This will be described later in detail.

The through-hole 540 substantially plays a role in reducing vibration or noise by the vibration reduction unit 500. The vibration or noise generated in the electrical connection unit 200 passes through the through-hole 540 and proceeds to the resonance space 550, which may be reduced by means of resonance.

The through-hole 540 is formed in the first frame 510. Specifically, the through-hole 540 is formed through the inside of the first frame 510 in the thickness direction of the first frame 510. In the illustrated embodiment, the through-hole 540 is formed through the vertical direction.

The extending length of the through-hole 540 may be determined according to the thickness of the first frame 510. In other words, the through-hole 540 may extend as long as the first surface 511 and the second surface 512 are spaced apart.

The through-hole 540 may be formed in plural. The plurality of through-holes 540 may be disposed in each of the plurality of modules M that partition the first frame 510. In an embodiment, the plurality of through-holes 540 may be disposed to surround the pipe member 530 radially outside.

In the embodiment shown in FIGS. 15 to 18, eight through-holes 540 are formed for each module M, and are disposed to surround the pipe member 530 disposed at the center thereof in eight directions. In the above embodiment, a total of seventy-two through-holes 540 are provided.

At this time, as described above, the plurality of modules M are disposed to cover each of the plurality of resonance spaces 550. Therefore, the eight through-holes 540 formed in any one module M communicate with the same resonance space 550. In addition, the through-holes 540 formed in the different modules M communicate with the different resonance spaces 550.

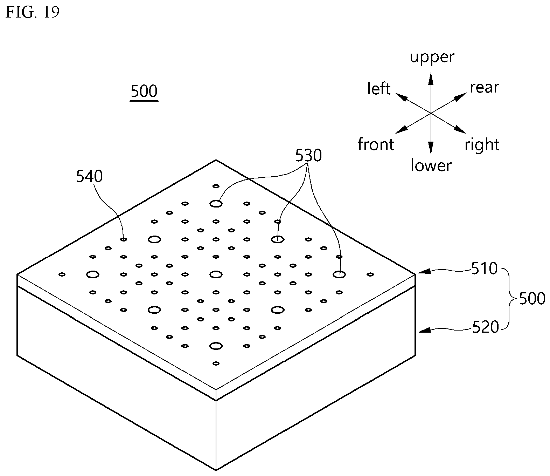

The number of through-holes 540 may be changed. In the embodiment illustrated in FIG. 19, the through-holes 540 formed in each module M are provided in two pairs that are disposed to face each other along the diagonal direction thereof. In the above embodiment, four through-holes 540 are formed in each module M.

The through-hole 540 is formed to have a predetermined cross-section. In the illustrated embodiment, the through-hole 540 has a circular cross-section and has a hollow shape extending in the thickness direction of the first frame 510.

The extending length and cross-sectional area of the through-hole 540 may act as a factor of the resonance frequency generated by the vibration reduction unit 500. This will be described later in detail.

The resonance space 550 is a space in which vibration or noise progressed through the pipe member 530 or the through-hole 540 are offset. The vibration or noise progressed to the resonance space 550 may be reduced by means of resonance. Accordingly, the magnitude of vibration or noise radiated to the outside of the housing 100 coupled with the vibration reduction unit 500 may also be reduced.

The resonance space 550 is a space formed inside the second frame 520. The resonance space 550 is surrounded by the first frame 510, the frame outer circumference 521 and the frame surface 522. In the illustrated embodiment, the horizontal outer circumference of the resonance space 550 is surrounded by the frame outer circumference 521. The lower side of the resonance space 550 is surrounded by the frame surface 522, and the upper side of the resonance space 550 is surrounded by the first frame 510.

The resonance space 550 communicates with the accommodation space 120. Specifically, the resonance space 550 communicates with the accommodation space 120 by the pipe member 530 and the through-holes 540. The vibration or noise generated in the electrical connection unit 200 may pass through the pipe member 530 or the through-holes 540 and proceed to the resonance space 550.

The resonance space 550 may be formed to have a predetermined volume. The volume of the resonance space 550, together with the shape of the pipe member 530 and the through-holes 540, is used as a factor for determining the resonance frequency to be formed. This will be described later in detail.

The resonance space 550 may be partitioned into a plurality of small spaces. The plurality of partitioned small spaces may communicate with pipe members 530 and through-holes 540 provided in each module M, respectively. The compartment may be achieved by a plurality of partition walls 560.

In the illustrated embodiment, the resonance space 550 is partitioned into a total of nine small spaces, three each in the front and rear directions and left and right directions. Each of the nine small spaces may be covered by nine modules M.

In other words, the resonance space 550 may be a space partitioned into a plurality of spaces partitioned by the partition wall 560. That is, each of the plurality of partitioned small spaces may be defined as a resonance space 55. According to the definition above, it will be understood that in the illustrated embodiment, nine resonance spaces 550 are formed.

The resonance space 550 may have an arbitrary shape capable of reducing advanced vibration or noise. In the illustrated embodiment, the resonance space 550 is a rectangular pillar-shaped space having a rectangular cross-section and having a height in the vertical direction. The shape of the resonance space 550 may be changed depending on the shape of the second frame 520 and the partition wall 560.

The partition wall 560 partitions the resonance space 550 into a plurality of small spaces.

The partition wall 560 is located in the resonance space 550. The partition wall 560 is formed to have a predetermined height. In an embodiment, the partition wall 560 may have an upper end thereof positioned on the same plane as the upper end of the frame outer circumference 521. In the embodiment, when the first frame 510 and the second frame 520 are coupled, communication between a plurality of partitioned small spaces may be blocked.

The partition wall 560 may be provided in plural. The plurality of partition walls 560 may be spaced apart from each other and may extend in one direction or in the other direction. In the illustrated embodiment, a total of four partition walls 560 are provided, including a pair extending in the front and rear directions and disposed to be spaced apart from each other, and another pair extending in the left and right directions and disposed to be spaced apart from each other.

In this case, the pair of partition walls 560 and the other pair of partition walls 560 may intersect at a predetermined angle. In an embodiment, the predetermined angle may be orthogonal.

The shape of each partitioned space or the resonance space 550 communicating with the pipe member 530 and the through-holes 540 provided in each module M may be changed by the plurality of partition walls 560. Accordingly, the resonance frequency generated by the vibration reduction unit 500 may be adjusted.

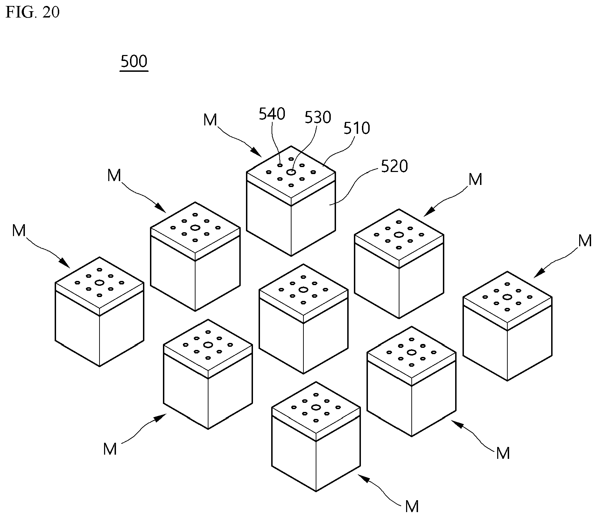

Referring to FIG. 20, a modified example of the vibration reduction unit 500 according to this embodiment is illustrated. In the illustrated modified example, the vibration reduction unit 500 is provided as a plurality of modules M that are physically spaced apart from each other. Each module M may be provided with a single pipe member 530 and a plurality of through-holes 540, respectively.

In the modified example, the number of modules M coupled to the housing 100 may be adjusted depending on the frequency of vibration or noise generated by the electrical connection unit 200. Accordingly, the generated vibration or noise may be more effectively reduced.

Meanwhile, the resonance frequency depending on the shape of the pipe member 530 and the resonance space 550 may be derived by the following Equation 1.

[Equation 1]

$$f_1 = \frac{v}{2\pi} \sqrt{\frac{A_1}{V_1 l_1}}$$

In the above equation, f1 is the resonance frequency, v is the velocity of vibration or noise, A1 is the cross-sectional area of the hollow formed inside the pipe member 530, V1 is the volume of the resonance space 550, and 11 is the extending length of the pipe member 530.

In addition, the resonance frequency depending on the shape of the through-holes 540 and the resonance space 550 may be derived by the following Equation 2.

# EP 4 489 040 A1

[Equation 2]

$$f_2 = \frac{v}{2\pi}\sqrt{\frac{A_2}{V_2 l_2}}$$

In the above equation, f2 is the resonance frequency, v is the velocity of the vibration or noise, A2 is the cross-sectional area of the through-holes 540, V2 is the volume of the resonance space 550, and l2 is the extending length of the pipe member 530.

In Equations 1 and 2, v, which is the velocity of the vibration or noise, is a constant. Therefore, it will be understood that by adjusting A1, A2, V1, V2, L1, and L2, the resonance frequencies f1 and f2 may be adjusted.

Furthermore, the vibration or noise of various frequencies may be reduced by appropriately synthesizing f1 and f2, or the vibration or noise of a specific frequency may be intensively reduced.

Therefore, the vibration reduction unit 500 according to the present embodiment may reduce vibration or noise of various frequencies by changing the shapes of the pipe member 530, the through-hole 540, and the resonance space 550. Accordingly, the vibration or noise radiated to the outside through the housing 100 coupled with the vibration reduction unit 500 may also be reduced.

In an embodiment, the pipe member 530, the through-hole 540, and the resonance space 550 described above may be formed to have different shapes. For example, the pipe member 530, the through-hole 540, and the resonance space 550 may be formed to have different shapes for each module M.

In the above embodiment, the plurality of modules M constituting the vibration reduction unit 500 are configured to offset different types of vibration or noise. Accordingly, even when the vibration or noise of various frequencies occurs in the electrical connection unit 200, the vibration or noise may be reduced by the vibration reduction unit 500 and then radiated to the outside.

One or more vibration reduction units 300, 400, and 500 according to each embodiment of the present disclosure described above may be provided. This is due to the vibration reduction units 300, 400, and 500 according to each embodiment being coupled to the housing 100 or the electrical connection unit 200 at different positions.

In embodiments in which the vibration reduction units 300, 400, and 500 are all provided, it will be understood that the generated vibration or noise in the electrical connection unit 200 may be most effectively reduced.

Although exemplary embodiments of the present disclosure have been described, the idea of the present disclosure is not limited to the embodiments set forth herein. Those of ordinary skill in the art who understand the idea of the present disclosure may easily propose other embodiments through supplement, change, removal, addition, etc. of elements within the same idea, but the embodiments will be also within the scope of the present disclosure.

### List of Reference Signs

| | | | |
|---|---|---|---|
| 10: | transformer | 100: | housing |
| 110: | wall portion | 111: | first wall |
| 112: | second wall | 113: | third wall |
| 114: | fourth wall | 115: | fifth wall |
| 120: | accommodation space | 130: | reinforcing rib |
| 131: | first reinforcing rib | 132: | second reinforcing rib |
| 140: | filling space | 200: | electrical connection unit |
| 210: | iron core member | 220: | winding member |
| 230: | support frame | 300: | vibration reduction unit |
| 310: | cover member | 311: | main cover |
| 312: | sub-cover | 320: | sound absorbing member |
| 330: | communication hole | 340: | closure member |
| 350: | protruding flow path portion | 400: | vibration reduction unit |
| 410: | iron core support member | 420: | transmission member |
| 421: | first transmission member | 422: | first transmission member |
| 430: | housing coupling member | 431: | first coupling member |
| 432: | second coupling member | 440: | elastic member |
| 441: | first elastic member | 442: | second elastic member |

(continued)

| 500: | vibration reduction unit | 510: | first frame |
|------|--------------------------|------|-------------|
| 511 | first surface | 512 | second surface |
| 520: | second frame | 521: | frame outer circumference |
| 522: | frame surface | 523: | fastening hole |
| 530: | pipe member | 540: | through-hole |
| 550: | resonance space | 560: | partition wall |
| d1: | first distance | d2: | second distance |
| d3: | third distance | t1: | first thickness |
| t2: | second thickness | M: | module |

**Claims**

1. A vibration reduction unit comprising:

   a first frame forming one portion of the exterior thereof;
   a second frame which forms the other portion of the exterior thereof, and which is coupled to the first frame;
   a resonance space formed inside the second frame so as to reduce transmitted vibration or noise by means of resonance; and
   a pipe member penetratively coupled to the first frame such that the resonance space communicates with the outside.

2. The vibration reduction unit of claim 1, comprising:
   a through-hole formed through the first frame such that the resonance space communicates with the outside.

3. The vibration reduction unit of claim 2, wherein the through-hole are formed in plural, and
   the plurality of the through-holes are disposed to surround the pipe member.

4. The vibration reduction unit of claim 1, wherein an extending length of the pipe member is formed to be greater than or equal to a thickness of the first frame, so that one end of the pipe member in an extending direction is located to protrude from the first frame.

5. The vibration reduction unit of claim 4, wherein the one end of the pipe member is located in the resonance space.

6. The vibration reduction unit of claim 1, wherein the first frame is partitioned into a plurality of modules,
   the resonance space is formed in plural, and the plurality of the resonance spaces are disposed to overlap the plurality of the modules, respectively, along the extending direction of the pipe member.

7. The vibration reduction unit of claim 6, wherein the pipe member is provided in plural, and the plurality of the pipe members penetrate the plurality of the modules, respectively, and each end of the plurality of the pipe members is respectively located in the plurality of the resonance spaces.

8. The vibration reduction unit of claim 7, comprising:

   a through-hole formed through the first frame such that the resonance space communicates with the outside, and
   the through-hole is formed in each of the plurality of the modules.

9. The vibration reduction unit of claim 8, wherein the plurality of through-holes are formed in each of the plurality of modules, and
   the plurality of through-holes communicates with each of the plurality of resonance spaces.

10. The vibration reduction unit of claim 1, comprising:
    a partition wall located in the resonance space and partitioning the resonance space into a plurality of spaces.

11. The vibration reduction unit of claim 10, wherein the partition wall comprises one portion extending in one direction and

24

the other portion extending in the other direction, and the one portion and the other portion intersect and extend at a predetermined angle.

12. A transformer comprising:

an electrical connection unit that is electrically connected to an external power supply and an external load, converts power transferred from the power supply and provides the converted power to the load;
a housing having an accommodation space for accommodating the electrical connection unit and a wall portion surrounding the accommodation space; and
a vibration reduction unit accommodated in the accommodation space and each coupled to the housing and configured to reduce vibration or noise generated from the electrical connection unit,
wherein the vibration reduction unit comprises:

a first frame forming one side toward the electrical connection unit;
a second frame coupled to the first frame and the wall portion, respectively;
a resonance space formed inside the second frame so as to reduce the transmitted vibration or noise by means of resonance; and
a pipe member penetratively coupled to the first frame such that the resonance space communicates with the accommodation space.

13. The transformer of claim 12, wherein the vibration reduction unit comprises a plurality of through-hole formed through the first frame such that the resonance space communicates with the accommodation space.

14. The transformer of claim 13, wherein a resonance frequency of the vibration or noise generated in the resonance space is calculated by using one or more of an extending length and a cross-sectional area of the pipe member, an extending length and a cross-sectional area of the through-hole, and a volume of the resonance space as a factor.

15. The transformer of claim 12, wherein the pipe member extends by a length equal to or larger than the thickness of the first frame, and one end of the pipe member in the extending direction is located in the resonance space.

FIG. 1

10

131(130)

131(130)

114

112

100

111

115

131(130)

113(110)

upper

left     rear

front     right

lower

FIG. 2

FIG. 3

10

131(130)

131(130)

114

upper

left    rear

front    right

lower

112

115

100

131(130)

111

113(110)

300

FIG. 4

300

upper

left — rear

front — right

lower

110

131

312(310)

131

311(310)

FIG. 5

(a)

312
100
300
320
131
130 132
312
140

(b)

100
310
311 312
131
131
311(310)

FIG. 6

FIG. 7

(a)

300

310
311  312

100

131

131

311(310)

(b)

d3
d2
d1

131

312
320
311(310)
100

312

FIG. 8

(a)

131

350

311(310)

100

310

311   312

131

(b)

131

312

311

320

350

100

312

t1

t2

FIG. 9

FIG. 10

FIG. 11

FIG. 12

400

front ◄——— rear

410

431

432(430)

441

442(440)

230

111(110)

210

220

200

230

431

432(430)

441

442(440)

112(110)

410

FIG. 13

FIG. 14

10

131(130)    114         131(130)

upper
left ↖ ↑ ↗ rear
front ↙ ↓ ↘ right
lower

115

112

500

120

131(130)

113(110)

210

200    220

FIG. 15

FIG. 16

FIG. 17

500

(a)

540 530 512

510

M

520

522 521 523

(b)

550

560

520

560

FIG. 18

500

FIG. 19

FIG. 20

500

# EP 4 489 040 A1

<table>
<tr><td colspan="2"><b>INTERNATIONAL SEARCH REPORT</b></td><td colspan="2">International application No.<br><br><b>PCT/KR2023/001057</b></td></tr>
</table>

| A. | CLASSIFICATION OF SUBJECT MATTER |
|---|---|

**H01F 27/33**(2006.01)i; **F16F 15/02**(2006.01)i; **G10K 11/172**(2006.01)i

According to International Patent Classification (IPC) or to both national classification and IPC

| B. | FIELDS SEARCHED |
|---|---|

Minimum documentation searched (classification system followed by classification symbols)

H01F 27/33(2006.01); G10K 11/02(2006.01); G10K 11/16(2006.01); H01F 27/02(2006.01); H01F 41/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 변압기(transformer), 진동(vibration), 저감(reduction)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2020-0143556 A (HYUNDAI ELECTRIC & ENERGY SYSTEMS CO., LTD.) 24 December 2020 (2020-12-24)<br>See paragraphs [0037], [0059]-[0066] and [0105]-[0119]; claims 1 and 9; and figures 2, 8 and 14-16. | 1-15 |
| Y | US 2008-0023261 A1 (KANEKO, Mitsugu et al.) 31 January 2008 (2008-01-31)<br>See paragraph [0149]; and figure 3. | 1-15 |
| A | KR 10-0879887 B1 (AHN, Gyung Duck) 22 January 2009 (2009-01-22)<br>See paragraphs [0014]-[0058]; and figures 1-11. | 1-15 |
| A | KR 10-2001-0010290 A (KOREA ELECTRIC POWER CORPORATION) 05 February 2001 (2001-02-05)<br>See paragraphs [0010]-[0030]; and figures 1-5. | 1-15 |
| A | KR 10-1753082 B1 (DONG YIN CO., LTD.) 04 July 2017 (2017-07-04)<br>See paragraphs [0019]-[0057]; and figures 1-4. | 1-15 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **28 April 2023** | **02 May 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2023/001057**

| Patent document cited in search report | | | Publication date (day/month/year) | Patent family member(s) | | | Publication date (day/month/year) |
|---|---|---|---|---|---|---|---|
| KR | 10-2020-0143556 | A | 24 December 2020 | CA | 3135408 | A1 | 17 December 2020 |
| | | | | EP | 3985693 | A1 | 20 April 2022 |
| | | | | EP | 3985693 | A4 | 30 November 2022 |
| | | | | KR | 10-2210362 | B1 | 03 February 2021 |
| | | | | US | 2022-0238273 | A1 | 28 July 2022 |
| | | | | WO | 2020-251178 | A1 | 17 December 2020 |
| US | 2008-0023261 | A1 | 31 January 2008 | EP | 1758095 | A1 | 28 February 2007 |
| | | | | EP | 1758095 | A4 | 01 October 2008 |
| | | | | JP | 2005-324681 | A | 24 November 2005 |
| | | | | JP | 2005-331766 | A | 02 December 2005 |
| | | | | JP | 4284231 | B2 | 24 June 2009 |
| | | | | JP | 4403014 | B2 | 20 January 2010 |
| | | | | WO | 2005-111993 | A1 | 24 November 2005 |
| KR | 10-0879887 | B1 | 22 January 2009 | None | | | |
| KR | 10-2001-0010290 | A | 05 February 2001 | None | | | |
| KR | 10-1753082 | B1 | 04 July 2017 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101530347

- KR 101661138